# EUROPEAN PATENT APPLICATION

(11) **EP 4 509 948 A1**
(43) Date of publication of application: **19.02.2025**
(21) Application number: 24732558.2
(22) Date of filing: 23.05.2024
(51) Int. Cl.: G06F 1/16, G06F 11/20, H01F 7/02, G06F 11/32

(54) **MULTI-FOLDABLE ELECTRONIC DEVICE, AND NOTIFICATION PROVIDING METHOD OF MULTI-FOLDABLE ELECTRONIC DEVICE**

(30) Priority: 26.06.2023 KR 20230081654; 19.07.2023 KR 20230093589
(71) Applicant: Samsung Electronics Co., Ltd, Suwon-si, Gyeonggi-do 16677 (KR)
(72) Inventor: KIM, Namwoo, Suwon-si, Gyeonggi-do 16677 (KR); KANG, Jeongho, Suwon-si, Gyeonggi-do 16677 (KR); KIM, Minho, Suwon-si, Gyeonggi-do 16677 (KR); PARK, Changi, Suwon-si, Gyeonggi-do 16677 (KR); PARK, Cheolwoong, Suwon-si, Gyeonggi-do 16677 (KR); BAE, Hyerim, Suwon-si, Gyeonggi-do 16677 (KR); HONG, Hyunchul, Suwon-si, Gyeonggi-do 16677 (KR); KIM, Sunglak, Suwon-si, Gyeonggi-do 16677 (KR); AHN, Jaeuk, Suwon-si, Gyeonggi-do 16677 (KR); YOON, Yeonggyu, Suwon-si, Gyeonggi-do 16677 (KR); CHOI, Junyoung, Suwon-si, Gyeonggi-do 16677 (KR); YOON, Byounguk, Suwon-si, Gyeonggi-do 16677 (KR)
(74) Representative: Appleyard Lees IP LLP
(86) International application number: PCT/KR2024/006972
(87) International publication number: WO 2025/005482

(57) **Abstract**

A multi-foldable electronic device according to various embodiments of the present disclosure may include a first housing, a second housing foldably coupled to a first side of the first housing, a third housing foldably coupled to a second side of the second housing, a first hinge member coupled between the first housing and the second housing, a second hinge member coupled between the second housing and the third housing, a flexible display including a first display area disposed on the first housing, a second display area disposed on the second housing, and a third display area disposed on the third housing, a first sensor configured to sense a first angle between the second housing and the first housing, a second sensor configured to sense a second angle between the second housing and the third housing, a memory configured to store executable instructions, and at least one processor operatively connected to the flexible display, the first sensor, the second sensor, and the memory and configured to access the memory and execute the instructions, in which the at least one processor 120 is configured to provide at least one notification when the second angle between the second housing and the third housing, which is sensed by the second sensor, is smaller than the first angle between the second housing and the first housing that is sensed by the first sensor. Various other embodiments may be possible.

## Description

### [Technical Field]

Various embodiments of the present disclosure relate to a multi-foldable electronic device and a method of providing a notification thereof.

### [Background Art]

There is an increasing use of foldable electronic devices capable of being folded and unfolded in a horizontal or vertical direction, and various functions are applied to the foldable electronic devices.

The foldable electronic device may operate in a state in which first and second housings are in a folded or unfolded state based on a hinge module.

The first and second housings of the foldable electronic device are rotated by the hinge module, such that the foldable electronic device may operate in an in-folding and/or out-folding way, for example.

The foldable electronic device may include a flexible display disposed to at least partially traverse the first housing, the hinge module, and the second housing.

The foldable electronic device may provide a user with various information such as texts, images, and/or videos by using the flexible display.

### [Disclosure of Invention]

### [Technical Problem]

There is an increasing demand from users for the expansion of displays of foldable electronic devices.

For example, the foldable electronic device may be implemented in the form of a multi-foldable electronic device including a first housing, a second housing, and a third housing.

The foldable electronic device (e.g., the multi-foldable electronic device) may include a display (e.g., a flexible display) disposed to at least partially traverse the first housing, the second housing, and the third housing.

A risk of damage may increase in case that the first and third housings of the foldable electronic device are folded with respect to the second housing in an abnormal order.

For example, the foldable electronic device may be configured such that the first housing is folded with respect to the second housing first, and the third housing is folded later. However, for example, the display of the foldable electronic device may be damaged in case that the third housing is folded with respect to the second housing first and the first housing is folded later.

Various embodiments of the present disclosure may provide a multi-foldable electronic device capable of providing at least one notification in case that a first housing, a second housing, and a third housing are folded in an abnormal order.

Technical problems to be solved by the present disclosure are not limited to the above-mentioned technical problems, and other technical problems, which are not mentioned above, may be clearly understood from the following descriptions by those skilled in the art to which the present disclosure pertains.

### [Solution to Problem]

A multi-foldable electronic device according to an embodiment of the present disclosure may include a first housing, a second housing foldably coupled to a first side of the first housing, a third housing foldably coupled to a second side of the second housing, a first hinge member coupled between the first housing and the second housing, and a second hinge member coupled between the second housing and the third housing. According to the embodiment, the multi-foldable electronic device may include the flexible display including a first display area disposed on the first housing, a second display area disposed on the second housing, and a third display area disposed on the third housing. According to the embodiment, the multi-foldable electronic device may include a first sensor configured to sense a first angle between the second housing and the first housing, a second sensor configured to sense a second angle between the second housing and the third housing, and a memory configured to store executable instructions. According to the embodiment, the multi-foldable electronic device may include at least one processor operatively connected to the flexible display, the first sensor, the second sensor, and the memory and configured to access the memory and execute the instructions. According to the embodiment, the at least one processor may be configured to provide at least one notification in case that the second angle between the second housing and the third housing, which is sensed by the second sensor, is smaller than the first angle between the second housing and the first housing that is sensed by the first sensor.

A method of a notification of a multi-foldable electronic device according to an embodiment of the present disclosure may include detecting, by a processor, by using a second sensor, a situation in which a third housing is folded toward a second housing first before a first housing is folded. According to the embodiment, the method may include calculating, by the processor, an angle between the third housing and the second housing that is detected by using the second sensor. According to the embodiment, the method may include identifying, by the processor, whether the angle between the third housing and the second housing is equal to or larger than a designated angle. According to the embodiment, the method may include outputting at least one notification when it is identified that the angle between the third housing and the second housing is smaller than the designated angle.

According to the embodiment, the method of providing the notification of the multi-foldable electronic device may be performed by a non-transitory computer-readable storage medium configured to store one or more programs.

### [Advantageous Effects of invention]

According to various embodiments of the present disclosure, it is possible to reduce damage to the multi-foldable electronic device by providing at least one notification (e.g., an alarm sound, vibration, or a pop-up message) in case that the first and third housings are folded with respect to the second housing in an abnormal order.

In addition, various effects that can be directly or indirectly identified through the present document may be provided.

### [Brief Description of Drawings]

In connection with the description of the drawings, the same or similar reference numerals may be used for the same or similar components.
FIG. 1 is a block diagram of an electronic device in a network environment according to various embodiments of the present disclosure.
FIG. 2A is a schematic view illustrating an unfolded state of a multi-foldable electronic device according to various embodiments of the present disclosure when viewed from the front side.
FIG. 2B is a schematic view illustrating an unfolded state of the multi-foldable electronic device according to various embodiments of the present disclosure when viewed from the rear side.
FIG. 3 is a view schematically illustrating a state in which a first housing of the multi-foldable electronic device according to the embodiment of the present disclosure is folded with respect to a second housing.
FIG. 4 is a view schematically illustrating a state in which the first housing and a third housing of the multi-foldable electronic device according to the embodiment of the present disclosure are folded with respect to the second housing.
FIG. 5 is a block diagram schematically illustrating a configuration of the multi-foldable electronic device according to an embodiment of the present disclosure.
FIG. 6 is a view schematically illustrating one embodiment in which a first sensor of the multi-foldable electronic device according to the embodiment of the present disclosure senses an angle between the first and second housings.
FIG. 7 is a view schematically illustrating one embodiment in which a second sensor of the multi-foldable electronic device according to the embodiment of the present disclosure senses an angle between the second and third housings.
FIG. 8 is a view schematically illustrating one embodiment related to threshold angles of the first and third housings with respect to the second housing of the multi-foldable electronic device according to the embodiment of the present disclosure.
FIG. 9 is a view schematically illustrating a configuration in which the multi-foldable electronic device according to various embodiments of the present disclosure includes first and second magnets.
FIG. 10 is a view schematically illustrating cross-sections of the first and second magnets according to the embodiment of the present disclosure.
FIG. 11 is a view schematically illustrating an embodiment in which the first housing of the multi-foldable electronic device illustrated in FIG. 9 according to various embodiments of the present disclosure is prevented from being folded with respect to the second housing.
FIG. 12 is a schematic view illustrating an unfolded state of the multi-foldable electronic device according to various embodiments of the present disclosure when viewed from the rear side.
FIG. 13 is a view schematically illustrating a folded state of the multi-foldable electronic device illustrated in FIG. 12 according to various embodiments of the present disclosure.
FIG. 14 is a view schematically illustrating a state in which the third housing of the multi-foldable electronic device illustrated in FIG. 12 according to various embodiments of the present disclosure is folded toward the second housing.
FIG. 15 is a view schematically illustrating a structure capable of reducing a degree to which the first housing is folded by means of the third housing of the multi-foldable electronic device illustrated in FIG. 12 according to various embodiments of the present disclosure.
FIG. 16 is a flowchart schematically illustrating a method of providing a notification in case that the first and third housings of the multi-foldable electronic device according to the embodiment of the present disclosure are folded.
FIG. 17 is a flowchart schematically illustrating a method of providing a notification in case that the first and third housings of the multi-foldable electronic device according to the embodiment of the present disclosure are folded with respect to the second housing.
FIG. 18 is a flowchart schematically illustrating various embodiments of the method of providing a notification in case that the first and third housings of the multi-foldable electronic device according to the embodiment of the present disclosure are folded with respect to the second housing.
FIG. 19 is a flowchart schematically illustrating a method of providing a notification in accordance with first and second designated angles of the multi-foldable electronic device according to the embodiment of the present disclosure.
FIG. 20 is a flowchart schematically illustrating a method of providing first and second notifications in accordance with the first and second designated angles of the multi-foldable electronic device according to the embodiment of the present disclosure.
FIG. 21 is a flowchart schematically illustrating various embodiments of the method of providing the first and second notifications in accordance with the first and second designated angles of the multi-foldable electronic device according to the embodiment of the present disclosure.

### [Mode for the Invention]

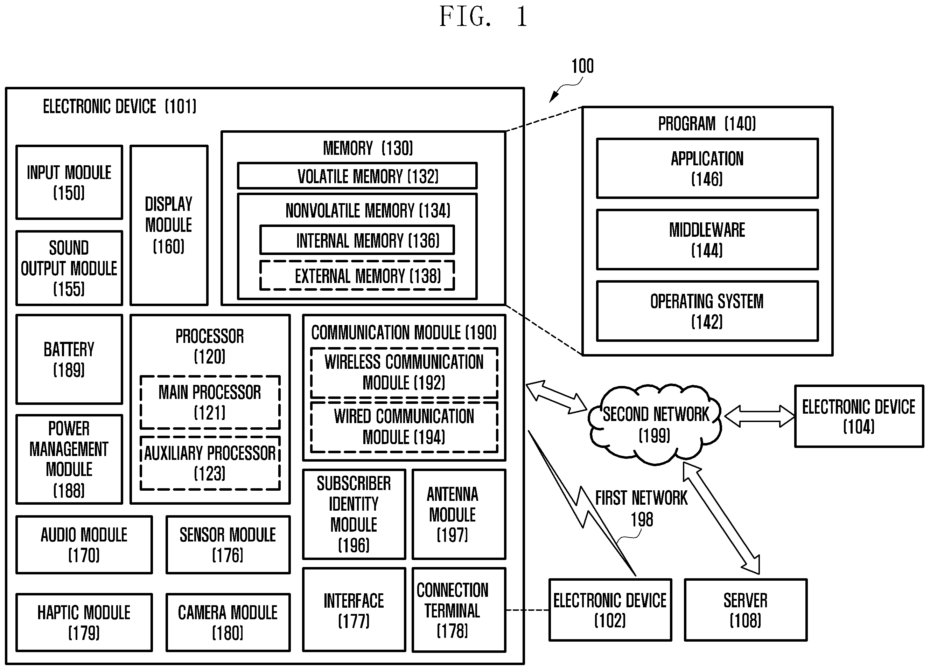

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

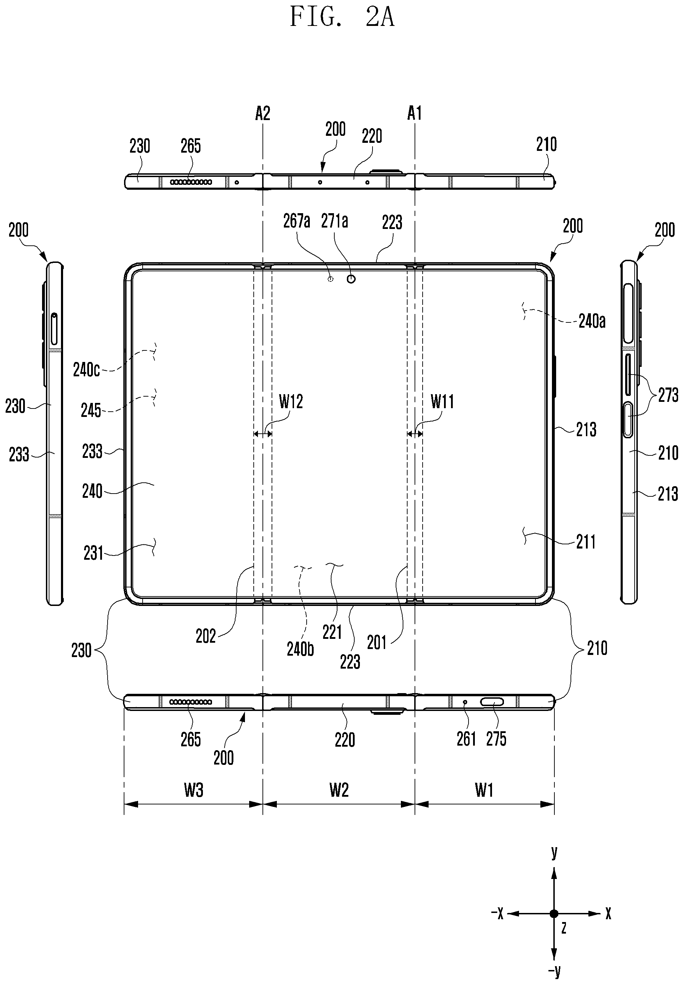

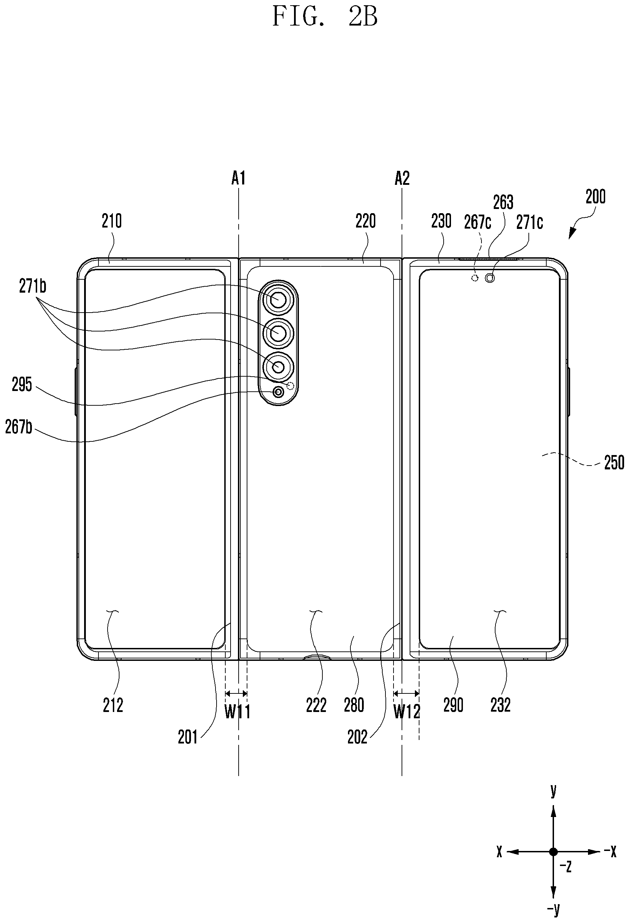

FIG. 2A is a schematic view illustrating an unfolded state of a multi-foldable electronic device according to various embodiments of the present disclosure when viewed from the front side. FIG. 2B is a schematic view illustrating an unfolded state of the multi-foldable electronic device according to various embodiments of the present disclosure when viewed from the rear side.

According to various embodiments, the embodiments of the electronic device 101 illustrated in FIG. 1 is included in embodiments of a multi-foldable electronic device 200 illustrated in FIGS. 2A and 2B. For example, the multi-foldable electronic device 200 illustrated in FIGS. 2A and 2B may include the processor 120, the memory 130, the input module 150, the sound output module 155, the display module 160, the audio module 170, the sensor module 176, the interface 177, the connecting terminal 178, the haptic module 179, the camera module 180, the antenna module 197, and/or the subscriber identification module 196 illustrated in FIG. 1.

With reference to FIGS. 2A and 2B, the multi-foldable electronic device 200 according to various embodiments of the present disclosure includes a first housing 210, a second housing 220, a third housing 230, a first hinge member 201, a second hinge member 202, and/or a flexible display 240.

According to the embodiment, the first housing 210 is foldably coupled to a first side (e.g., an x-axis direction) of the second housing 220. The first hinge member 201 is coupled between the first housing 210 and the second housing 220. The first hinge member 201 is disposed so that the first housing 210 and the second housing 220 folded or unfolded with respect to each other. The first hinge member 201 includes a hinge device, a hinge module, a hinge plate, or a hinge assembly. The first housing 210 and the second housing 220 are coupled to be rotatable about a first folding axis A1 by using the first hinge member 201.

According to various embodiments, the second housing 220 is foldably coupled to one side (e.g., a -x-axis direction) of the first housing 210. The first side (e.g., the x-axis direction) of the second housing 220 is operatively coupled to at least a part of the first housing 210, and a second side (e.g., the -x-axis direction) of the second housing 220 is operatively coupled to at least a part of the third housing 230.

According to the embodiment, the third housing 230 is foldably coupled to the second side (e.g., the -x-axis direction) of the second housing 220. The second hinge member 202 is coupled between the second housing 220 and the third housing 230. The second hinge member 202 is disposed so that the second housing 220 and the third housing 230 is folded or unfolded with respect to each other. The second hinge member 202 includes a hinge device, a hinge module, a hinge plate, or a hinge assembly. The second housing 220 and the third housing 230 are coupled to be rotatable about a second folding axis A2 by using the second hinge member 202. According to various embodiments, one side (e.g., the x-axis direction) of the third housing 230 is foldably coupled to the second side (e.g., the -x-axis direction) of the second housing 220.

According to the embodiment, a normal folding order of the multi-foldable electronic device 200 is configured as the case in which the first housing 210 is folded with respect to the second housing 220 first by means of the first hinge member 201 and the third housing 230 is folded later with respect to the second housing 220 by means of the second hinge member 202. According to various embodiments, an abnormal folding order of the multi-foldable electronic device 200 is configured and recognized as the case in which the third housing 230 is folded with respect to the second housing 220 first by means of the second hinge member 202 and the first housing 210 is folded later with respect to the second housing 220 by means of the first hinge member 201.

According to the embodiment, a width w1 of the first housing 210 in a horizontal direction (e.g., the x-axis and -x-axis directions) is smaller than a width w2 of the second housing 220 in the horizontal direction (e.g., the x-axis and -x-axis directions). The width w2 of the second housing 220 in the horizontal direction (e.g., the x-axis and -x-axis directions) is substantially equal to a width w3 of the third housing 230 in the horizontal direction (e.g., the x-axis and -x-axis directions). According to various embodiments, the width w3 of the third housing 230 in the horizontal direction (e.g., the x-axis and -x-axis directions) is larger than the width w2 of the second housing 220 in the horizontal direction (e.g., the x-axis and -x-axis directions).

According to the embodiment, the first housing 210 and the second housing 220 is disposed at two opposite sides based on the first folding axis A1 on which the first hinge member 201 is disposed, and the first housing 210 and the second housing 220 may have an asymmetric shape with respect to the first folding axis A1. According to various embodiments, the first housing 210 and the second housing 220 may have a symmetric shape with respect to the first folding axis A1. An angle or distance defined between the first housing 210 and the second housing 220 may vary depending on whether the foldable electronic device 200 is in an unfolded state, a folded state, or an intermediate state.

According to the embodiment, the second housing 220 and the third housing 230 is disposed at two opposite sides based on the second folding axis A2 on which the second hinge member 202 is disposed, the second housing 220 and the third housing 230 may have a substantially symmetric shape with respect to the second folding axis A2. According to various embodiments, the second housing 220 and the third housing 230 may have an asymmetric shape with respect to the second folding axis A2. An angle or distance defined between the second housing 220 and the third housing 230 may vary depending on whether the foldable electronic device 200 is in the unfolded state, the folded state, or the intermediate state.

According to the embodiment, a width w12 of the second hinge member 202 is larger than a width w11 of the first hinge member 201. For example, the width w12 of the second hinge member 202 is larger than the width w11 of the first hinge member 201 in case that the third housing 230 is disposed above the first housing 210 when the first housing 210 is folded with respect to the second housing 220 and the third housing 230 is folded with respect to the second housing 220. For example, the first hinge member 201 may include a slim hinge with a small width. For example, the second hinge member 202 may include a wide hinge having a larger width than the first hinge member 201.

According to various embodiments, because the width w12 of the second hinge member 202 is larger than the width w11 of the first hinge member 201, a part of the second housing 220 may come into contact with a part of the first housing 210 in case that the third housing 230 is folded toward the second housing 220 first. In this state, in case that the first housing 210 is folded toward the second housing 220 later, the first housing 210 may collide with a part of the third housing 230 and be damaged.

According to the embodiment, the flexible display 240 is disposed to at least partially traverse front surfaces (e.g., a z-axis direction) of the first housing 210, the second housing 220, and the third housing 230. The flexible display 240 is a first display, a foldable display, or a main display. According to various embodiments, a sub-display 250 (e.g., a second display) is disposed on a rear surface (e.g., a -z-axis direction) of the third housing 230.

In the present document, a surface on which the flexible display 240 is defined as a front surface (e.g., the z-axis direction) of the multi-foldable electronic device 200, and a surface opposite to the front surface is defined as a rear surface (e.g., the -z-axis direction) of the multi-foldable electronic device 200. A surface, which surrounds a space between the front and rear surfaces, is defined as a side surface of the multi-foldable electronic device 200.

According to the embodiment, the flexible display 240 includes a first display area 240a disposed on the first housing 210, a second display area 240b disposed on the second housing 220, and a third display area 240c disposed on the third housing 230. The first display area 240a, the second display area 240b, and the third display area 240c are integrated and constitute the flexible display 240. According to various embodiments, in case that the multi-foldable electronic device 200 is in the unfolded state, the flexible display 240 is configured to be disposed on the most part of the front surface (e.g., the z-axis direction) of the multi-foldable electronic device 200. At least a partial area of the flexible display 240 is deformed to a flat or curved surface. The first display area 240a, the second display area 240b, and the third display area 240c of the flexible display 240 is exemplarily physically separated. The flexible display 240 is defined as a single seamless entire screen.

According to various embodiments, when the multi-foldable electronic device 200 is in the unfolded state, the first housing 210 includes a first surface 211 connected to at least a part of the first hinge member 201 and disposed to be directed toward the front surface of the multi-foldable electronic device 200, a second surface 212 directed in a direction opposite to the first surface 211, and/or a first lateral member 213 configured to surround at least a part of a first space between the first surface 211 and the second surface 212.

According to various embodiments, when the multi-foldable electronic device 200 is in the unfolded state, the second housing 220 includes a third surface 221 connected to at least a part of the first hinge member 201 and at least a part of the second hinge member 202 and disposed to be directed toward the front surface of the multi-foldable electronic device 200, a fourth surface 222 directed in a direction opposite to the third surface 221, and/or a second lateral member 223 configured to surround at least a part of a second space between the third surface 221 and the fourth surface 222.

According to various embodiments, when the multi-foldable electronic device 200 is in the unfolded state, the third housing 230 includes a fifth surface 231 connected to at least a part of the second hinge member 202 and disposed to be directed toward the front surface of the multi-foldable electronic device 200, a sixth surface 232 directed in a direction opposite to the fifth surface 231, and/or a third lateral member 233 configured to surround at least a part of a third space between the fifth surface 231 and the sixth surface 232.

According to various embodiments, when the multi-foldable electronic device 200 is in the unfolded state, the first surface 211, the third surface 221, and the fifth surface 231 are directed in substantially the same direction (e.g., the z-axis direction). When the multi-foldable electronic device 200 is in the unfolded state, the second surface 212, the fourth surface 222, and the sixth surface 232 are directed in substantially the same direction (e.g., the -z-axis direction).

According to various embodiments, the first housing 210 and the second housing 220 of the multi-foldable electronic device 200 are in the folded state, the first surface 211 and the third surface 221 are disposed to face each other. When the second housing 220 and the third housing 230 of the multi-foldable electronic device 200 are in the folded state, the third surface 221 and the fifth surface 231 are disposed to face each other.

According to various embodiments, the multi-foldable electronic device 200 also includes a recess 245 formed by structurally coupling the first housing 210, the second housing 220, and the third housing 230 and configured to accommodate the flexible display 240. The recess 245 may have substantially the same size as the flexible display 240.

According to various embodiments, when the multi-foldable electronic device 200 is in the unfolded state, the first housing 210, the second housing 220, and the third housing 230 define an angle of about 180 degrees, and the first display area 240a, the second display area 240b, and the third display area 240c of the flexible display 240 are disposed on substantially the same plane and directed in substantially the same direction (e.g., the z-axis direction).

According to various embodiments, the first housing 210 and the second housing 220 define, by using the first hinge member 201, an angle at which the first housing 210 and the second housing 220 is stopped at a designated folding angle between the folded state and the unfolded state (e.g., a free stop function). In various embodiments, the first housing 210 may also rotate, by using the first hinge member 201, based on a designated inflection angle, while being pressed in an unfolding direction (e.g., the -z-axis direction) so that the first housing 210 moves to the rear surface of the second housing 220.

According to various embodiments, the second housing 220 and the third housing 230 define, by using the second hinge member 202, an angle at which the second housing 220 and the third housing 230 is stopped at a designated folding angle between the folded state and the unfolded state. In various embodiments, the third housing 230 may also rotate, by using the second hinge member 202, based on a designated inflection angle, while being pressed in the unfolding direction (e.g., the -z-axis direction) so that the third housing 230 moves to the rear surface of the second housing 220.

According to various embodiments, the flexible display 240 is disposed to be supported by the first surface 211 of the first housing 210, the first hinge member 201, the third surface 221 of the second housing 220, the second hinge member 202, and the fifth surface 231 of the third housing 230. In the embodiment, the sub-display 250 is disposed in an internal space of the third housing 230 so as to be at least partially visible from the outside through the sixth surface 232. In various embodiments, the sub-display 250 is also be disposed in an internal space of the first housing 210 so as to be visible from the outside through the second surface 212.

According to the embodiment, the flexible display 240 may be mainly used when the multi-foldable electronic device 200 is in the unfolded state, and the sub-display 250 may be mainly used when the foldable electronic device 200 is in the folded state. The flexible display 240 is disposed in an accommodation space formed by the first housing 210, the second housing 220, and the third housing 230. For example, the flexible display 240 is disposed in the recess 245 formed by the first housing 210, the second housing 220, and the third housing 230.

According to the embodiment, the multi-foldable electronic device 200 includes a first rear surface cover 280 disposed on the fourth surface 222 of the second housing 220, and a second rear surface cover 290 disposed on the sixth surface 232 of the third housing 230. In various embodiments, at least a part of the first rear surface cover 280 is integrated with a part of the second lateral member 223. In various embodiments, at least a part of the second rear surface cover 290 is integrated with a part of the third lateral member 233. According to the embodiment, at least one of the first rear surface cover 280 and the second rear surface cover 290 is provided in the form of a substantially transparent plate (e.g., a glass or polymer plate including various coating layers) or an opaque plate.

According to various embodiments, for example, the first rear surface cover 280 is provided in the form of an opaque plate made of coating or tinted glass, ceramic, polymer, metal (e.g., aluminum, stainless steel (STS), or magnesium), or a combination of at least two of the above-mentioned materials. For example, the second rear surface cover 290 is provided in the form of a substantially transparent plate made of glass, polymer, or the like. In this case, the sub-display 250 is disposed in the internal space of the third housing 230 so as to be visible from the outside through the second rear surface cover 290.

According to various embodiments, the multi-foldable electronic device 200 includes at least one of an input module 261, sound output modules 263 and 265, sensor modules 267a, 267b, and 267c, camera modules 271a, 271b, and 271c, a key input device 273, an indicator (not illustrated), and a connector port 275. In various embodiments, the multi-foldable electronic device 200 may exclude at least one of the above-mentioned constituent elements or further include at least one of the other constituent elements.

According to the embodiment, the input module 261 includes at least one microphone disposed to detect a direction of a sound. The input module 261 includes the input module 150 illustrated in FIG. 1.

According to the embodiment, the sound output modules 263 and 265 include at least one speaker. The sound output modules 263 and 265 include a telephone receiver 263 disposed by means of the sixth surface 232 of the third housing 230, and/or a speaker 265 disposed on at least one of an upper portion (e.g., a y-axis direction) and a lower portion (e.g., a -y-axis direction) of the third lateral member 233 of the third housing 230. The sound output modules 263 and 265 include the sound output module 155 illustrated in FIG. 1.

According to the embodiment, the input module 261, the sound output modules 263 and 265, and the connector port 275 are disposed in spaces of the first housing 210, the second housing 220, and/or the third housing 230 and exposed to an external environment through at least one hole formed in the first housing 210, the second housing 220, and/or the third housing 230. In the embodiment, the holes formed in the first housing 210, the second housing 220, and/or the third housing 230 are used in common for the input module 261 and the sound output modules 263 and 265. In the embodiment, the sound output modules 263 and 265 include speakers (e.g., piezoelectric speakers) that operate while being disposed in the holes formed in the first housing 210 and/or the third housing 230.

According to various embodiments, the camera modules 271a, 271b, and 271c include a first camera module 271a disposed on the third surface 221 of the second housing 220, a second camera module 271b disposed on the fourth surface 222 of the second housing 220, and/or a third camera module 271c disposed on the sixth surface 232 of the third housing 230. According to the embodiment, the foldable electronic device 200 includes a flash 295 disposed in the vicinity of the second camera module 271b. For example, the flash 295 may include a light-emitting diode or a xenon lamp. According to the embodiment, the camera modules 271a, 271b, and 271c each include one or more of a lens, an image sensor, and/or an image signal processor. In the embodiment, at least one of the camera modules 271a, 271b, and 271c includes two or more lenses (e.g., a wide-angle and a telephoto lens) and image sensors disposed together on any one surface of the first housing 210, the second housing 220, and/or the third housing 230. For example, the camera modules 271a, 271b, and 271c may include the camera module 180 illustrated in FIG. 1.

According to the embodiment, the sensor modules 267a, 267b, and 267c are operable to generate electrical signals or data values corresponding to an internal operating state of the multi-foldable electronic device 200 or the external environment state. According to various embodiments, the sensor modules 267a, 267b, and 267c include a first sensor module 267a disposed on the third surface 221 of the second housing 220, a second sensor module 267b disposed on the fourth surface 222 of the second housing 220, and/or a third sensor module 267c disposed on the sixth surface 232 of the third housing 230. In various embodiments, the sensor modules 267a, 267b, and 267c include at least one of a gesture sensor, a grip sensor, a color sensor, an infrared (IR) sensor, an illuminance sensor, an ultrasonic sensor, an iris recognition sensor, and a distance detection sensor (e.g., a time-of-flight (TOF) sensor or a LiDAR (light detection and ranging)). For example, the sensor modules 267a, 267b, and 267c may include the sensor module 176 illustrated in FIG. 1.

According to various embodiments, the multi-foldable electronic device 200 further includes at least one non-illustrated sensor module, e.g., a Hall sensor, an acceleration sensor, an angular velocity sensor, a gyro sensor, a folding detection sensor, a proximity sensor, an atmospheric pressure sensor, a magnetic sensor, a biosensor, a temperature sensor, a humidity sensor, and a fingerprint recognition sensor.

According to the embodiment, the key input device 273 is disposed to be exposed to the outside through the first lateral member 213 of the first housing 210. In the embodiment, the key input device 273 is also be disposed to be exposed to the outside through the third lateral member 233 of the third housing 230. In the embodiment, the multi-foldable electronic device 200 may exclude some or all of the key input devices 273, and the excluded key input device 273 may be implemented as other types such as a soft key on at least one of the displays 240 and 250. In various embodiments, the key input device 273 is implemented by using a pressure sensor included in at least one of the displays 240 and 250. In the embodiment, the key input device 273 includes a power button and/or a sound volume adjustment button of the foldable electronic device 200.

According to the embodiment, the connector port 275 includes a connector (e.g., a USB connector or an interface connector port module (IF module)) configured to transmit or receive power and/or data to or from an external electronic device (e.g., the external electronic devices 102, 104, and 108 in FIG. 1). In the embodiment, the connector port 275 serves to transmit or receive audio signals to or from the external electronic device or further includes a separate connector port (e.g., an earphone jack hole) for transmitting or receiving audio signals to or from the external electronic device. For example, the connector port 275 may include the connecting terminal 178 illustrated in FIG. 1.

According to various embodiments, at least one of the camera modules 271a and 271c among the camera modules 271a, 271b, and 271c, at least one of the sensor modules 267a and 267c among the sensor modules 267a, 267b, and 267c, and/or the indicator is disposed to be exposed through at least one of the displays 240 and 250. For example, at least one of the camera modules 271a and 271c, at least one of the sensor modules 267a and 267c, and/or the indicator is provided in the internal space of at least one of the housings 210, 220, and 230, disposed below an activation area (display area) of at least one of the displays 240 and 250, and disposed to adjoin the external environment through a transparent area or an opening formed to a cover member (e.g., a window layer (not illustrated) of the flexible display 240 and/or the second rear surface cover 290).

According to various embodiments, the multi-foldable electronic device 200 disclosed below may include at least some of the embodiments described with reference to FIGS. 1 to 2B. The embodiments related to the multi-foldable electronic device 200 disclosed below are incorporated into or applied to the embodiments of the multi-foldable electronic device 200 described with reference to FIGS. 2A and 2B. In the following description of various embodiments of the present disclosure, the constituent elements substantially identical to the constituent elements in the embodiments illustrated in FIGS. 1 to 2B will be designated by the same reference numerals, and a repeated description of functions thereof is omitted.

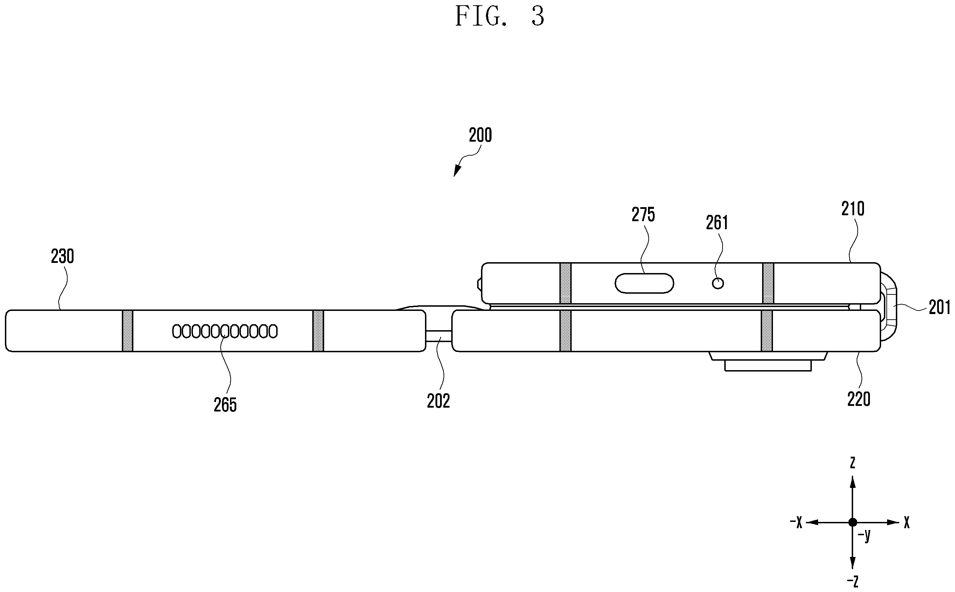

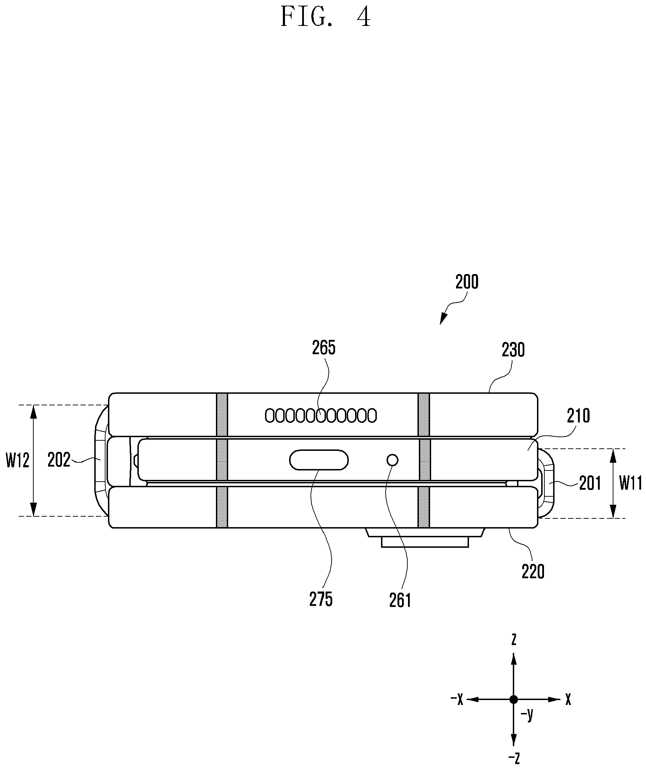

FIG. 3 is a view schematically illustrating a state in which the first housing of the multi-foldable electronic device according to the embodiment of the present disclosure is folded with respect to the second housing. FIG. 4 is a view schematically illustrating a state in which the first and third housings of the multi-foldable electronic device according to the embodiment of the present disclosure are folded with respect to the second housing.

According to the embodiment, FIG. 3 is a view illustrating a state in which the first housing 210 of the multi-foldable electronic device 200 is folded toward the second housing 220 when viewed in the -y-axis direction. According to the embodiment, FIG. 4 is a view illustrating a state in which the first housing 210 of the multi-foldable electronic device 200 is folded toward the second housing 220 first, and the third housing 230 is folded toward the second housing 220 later (e.g., a normal folding order) when viewed in the -y-axis direction.

With reference to FIGS. 3 and 4, the multi-foldable electronic device 200 includes the first housing 210, the second housing 220, the third housing 230, the first hinge member 201, and the second hinge member 202.

According to the embodiment, the first housing 210 is folded toward the upper portion (e.g., the z-axis direction) of the second housing 220 first by means of the first hinge member 201 (e.g., the slim hinge).

According to the embodiment, after the first housing 210 is folded with respect to the second housing 220 by means of the first hinge member 201, the third housing 230 is folded toward the second housing 220 by means of the second hinge member 202 (e.g., the wide hinge), such that the third housing 230 is disposed on the upper portion (e.g., the z-axis direction) of the first housing 210.

According to the embodiment, the normal folding order of the multi-foldable electronic device 200 is defined as the case in which the first housing 210 is folded toward the second housing 220 first by means of the first hinge member 201 and the third housing 230 is folded toward the second housing 220 later by means of the second hinge member 202. According to various embodiments, the abnormal folding order of the multi-foldable electronic device 200 is defined as the case in which the third housing 230 is folded toward the second housing 220 first by means of the second hinge member 202 and the first housing 210 is folded toward the second housing 220 later by means of the first hinge member 201.

According to the embodiment, the first hinge member 201 has the first width w11. The second hinge member 202 has the second width w12. The second width w12 is larger than the first width w11. According to various embodiments, the first housing 210 needs to be folded with respect to the second housing 220, and the third housing 230 needs to be folded with respect to the second housing 220, such that the third housing 230 needs to be disposed on the upper portion (e.g., the z-axis direction) of the first housing 210. Therefore, the second width w12 of the second hinge member 202 is larger than the first width w11 of the first hinge member 201. For example, the first hinge member 201 includes the slim hinge with a small width. For example, the second hinge member 202 includes the wide hinge having a larger width than the first hinge member 201.

According to various embodiments, because the second width w12 of the second hinge member 202 is larger than the first width w11 of the first hinge member 201, a part of the second housing 220 may come into contact with a part of the first housing 210 in case that the third housing 230 is folded toward the second housing 220 first. In this state, in case that the first housing 210 is folded toward the second housing 220 later, the first housing 210 may collide with a part of the third housing 230 and be damaged.

According to the embodiment, in order to reduce a risk of damage to the multi-foldable electronic device 200, the multi-foldable electronic device 200 needs to be folded in the order in which the first housing 210 is folded toward the second housing 220 first and the third housing 230 is folded toward the second housing 220 later (e.g., the normal folding order).

According to various embodiments, the multi-foldable electronic device 200 is operable to provide a user with at least one notification (e.g., an alarm sound, vibration, and/or a pop-up message) when the multi-foldable electronic device 200 is folded in the order in which the third housing 230 is folded toward the second housing 220 first and the first housing 210 is folded toward the second housing 220 later (e.g., the abnormal folding order).

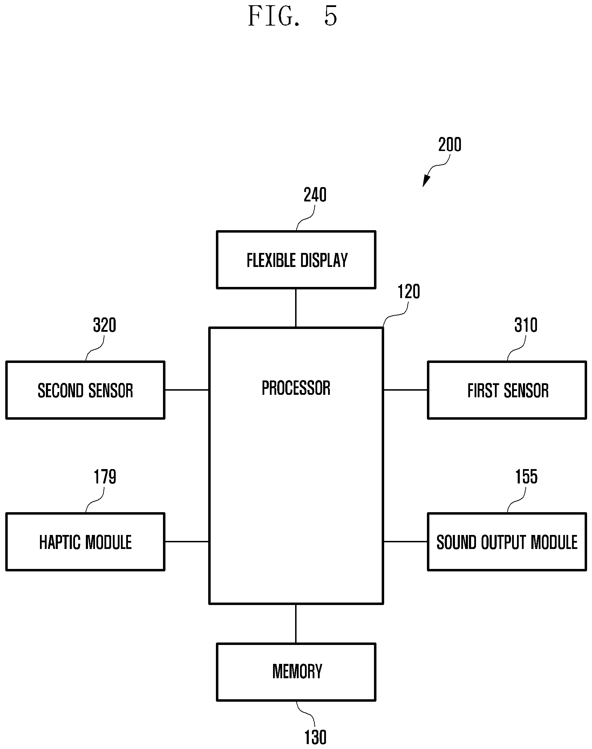

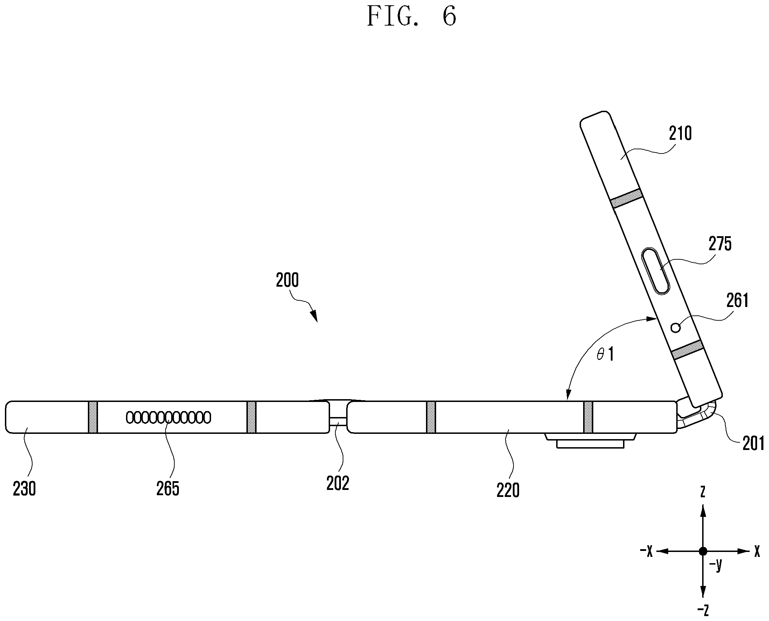

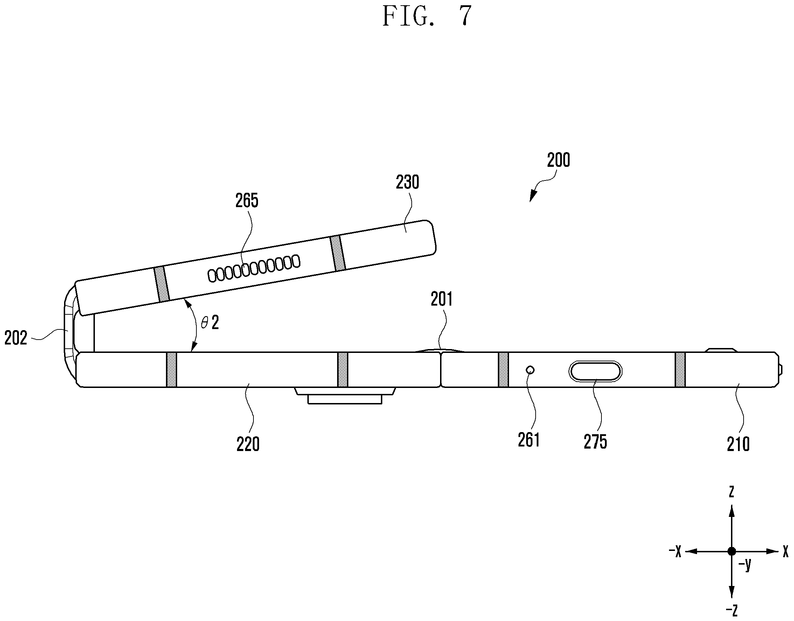

FIG. 5 is a block diagram schematically illustrating a configuration of the multi-foldable electronic device according to an embodiment of the present disclosure. FIG. 6 is a view schematically illustrating one embodiment in which a first sensor of the multi-foldable electronic device according to the embodiment of the present disclosure senses an angle (e.g., a first angle) between the first and second housings. FIG. 7 is a view schematically illustrating one embodiment in which a second sensor of the multi-foldable electronic device according to the embodiment of the present disclosure senses an angle (e.g., a second angle) between the second and third housings.

With reference to FIG. 5, the multi-foldable electronic device 200 includes a first sensor 310, a second sensor 320, the sound output module 155, the haptic module 179, the flexible display 240, the memory 130, and/or the processor 120.

According to various embodiments, the first sensor 310, the second sensor 320, the sound output module 155, the haptic module 179, the flexible display 240, the memory 130, and the processor 120 are electrically or operatively connected.

According to the embodiment, the first sensor 310 is operable to sense the first angle (e.g., a first folding angle) between the first housing 210 and the second housing 220 and transfer information on the sensed angle to the processor 120.

For example, with reference to FIG. 6, in case that the first housing 210 is folded toward the second housing 220 by means of the first hinge member 201, the first sensor 310 is operable to detect an angle θ1 (e.g., the first angle) between the first housing 210 and the second housing 220.

According to the embodiment, the first sensor 310 is disposed on at least one of the first housing 210 and the second housing 220. The first sensor 310 includes an angle sensor, a folding measurement sensor, an acceleration sensor, an angular velocity sensor, a Hall sensor, a gyro sensor, a motion sensor, or a proximity sensor. According to various embodiments, the first sensor 310 is not limited to the above-mentioned sensor. Various other sensors may be used as long as the sensor is operable to detect the folding angle (e.g., the first angle θ1) between the first housing 210 and the second housing 220.

According to the embodiment, angle information between the first housing 210 and the second housing 220, which is detected by the first sensor 310, is calculated by the processor 120. The first sensor 310 may include the sensor module 176 illustrated in FIG. 1.

According to the embodiment, the second sensor 320 is operable to sense the second angle (e.g., a second folding angle) between the second housing 220 and the third housing 230 and transfer information on the sensed angle to the processor 120.

For example, with reference to FIG. 7, in case that the third housing 230 is folded toward the second housing 220 by means of the second hinge member 202, the second sensor 320 is operable to detect an angle θ2 (e.g., the second angle) between the second housing 220 and the third housing 230.

According to the embodiment, the second sensor 320 is disposed on at least one of the second housing 220 and the third housing 230. The second sensor 320 includes an angle sensor, a folding measurement sensor, an acceleration sensor, an angular velocity sensor, a Hall sensor, a gyro sensor, a motion sensor, or a proximity sensor. According to various embodiments, the second sensor 320 is not limited to the above-mentioned sensor. Various other sensors may be used as long as the sensor may detect the folding angle (e.g., the second angle θ2) between the second housing 220 and the third housing 230.

According to the embodiment, angle information between the second housing 220 and the third housing 230, which is detected by the second sensor 320, is calculated by the processor 120. The second sensor 320 may include the sensor module 176 illustrated in FIG. 1. According to the embodiment, the angle information may be an output value detected by the first sensor 310 (e.g., the Hall sensor) and/or the second sensor 320 (e.g., the Hall sensor) or a value converted on the basis of the output value detected by the first sensor 310 and/or the second sensor 320. For example, the output value detected by the first sensor 310 (e.g., the Hall sensor) and/or the second sensor 320 (e.g., the Hall sensor) may include a value (e.g., a magnetic field, a voltage, an electric current, resistance, and/or a magnitude of a signal) that is used to estimate the angle without converting the output value into the angle information (e.g., the angle value).

According to the embodiment, in case that the first housing 210 and the third housing 230 are folded with respect to the second housing 220 in the abnormal order, the sound output module 155 is operable to output a notification (e.g., an alarm sound) under the control of the processor 120. For example, when the third housing 230 is folded toward the second housing 220 first and the first housing 210 is folded toward the second housing 220 later, the sound output module 155 may output an alarm sound (e.g., a first notification) to the user of the foldable electronic device 200.

According to various embodiments, the processor 120 is operable to output an alarm sound through the sound output module 155 when the angle (e.g., the second angle θ2) between the second housing 220 and the third housing 230, which is sensed by the second sensor 320, is smaller than the angle (e.g., the first angle θ1) between the first housing 210 and the second housing 220 that is sensed by the first sensor 310.

According to various embodiments, the processor 120 is operable to output a primary alarm sound through the sound output module 155 when the angle (e.g., the second angle θ2) between the second housing 220 and the third housing 230, which is sensed by the second sensor 320, is equal to or smaller than a first designated range (e.g., a first designated angle), and the processor 120 is operable to output a secondary alarm sound, which has a larger sound volume than the primary alarm sound, through the sound output module 155 when the angle (e.g., the second angle θ2) between the second housing 220 and the third housing 230 is equal to or smaller than a second designated range (e.g., a second designated angle) smaller than the angle in the first designated range.

According to the embodiment, the haptic module 179 is operable to output a notification (e.g., vibration) under the control of the processor 120 in case that the first housing 210 and the third housing 230 are folded with respect to the second housing 220 in the abnormal order. For example, when the third housing 230 is folded toward the second housing 220 first and the first housing 210 is folded toward the second housing 220 later, the haptic module 179 may output vibration (e.g., a second notification) to the user of the foldable electronic device 200.

According to various embodiments, the processor 120 is operable to output vibration through the haptic module 179 when the angle (e.g., the second angle θ2) between the second housing 220 and the third housing 230, which is sensed by the second sensor 320, is smaller than the angle (e.g., the first angle θ1) between the first housing 210 and the second housing 220 that is sensed by the first sensor 310.

According to various embodiments, the processor 120 is operable to output primary vibration through the haptic module 179 when the angle (e.g., the second angle θ2) between the second housing 220 and the third housing 230, which is sensed by the second sensor 320, is equal to or smaller than the first designated range (e.g., the first designated angle), and the processor 120 is operable to output secondary vibration, which is larger in number of times than the primary vibration, through the haptic module 179 when the angle (e.g., the second angle θ2) between the second housing 220 and the third housing 230 is equal to or smaller than the second designated range (e.g., the second designated angle) smaller than the angle in the first designated range.

According to the embodiment, the flexible display 240 is operable to output a notification (e.g., a pop-up message) under the control of the processor 120 in case that the first housing 210 and the third housing 230 are folded with respect to the second housing 220 in the abnormal order. For example, when the third housing 230 is folded toward the second housing 220 first and the first housing 210 is folded toward the second housing 220 later, the flexible display 240 may output a pop-up message (e.g., a third notification) to the user of the foldable electronic device 200.

According to various embodiments, the processor 120 is operable to output the pop-up message through the flexible display 240 (or the sub-display 250) when the angle (e.g., the second angle θ2) between the second housing 220 and the third housing 230, which is sensed by the second sensor 320, is smaller than the angle (e.g., the first angle θ1) between the first housing 210 and the second housing 220 that is sensed by the first sensor 310.

According to various embodiments, the processor 120 is operable to output a primary pop-up message through the flexible display 240 (or the sub-display 250) when the angle (e.g., the second angle θ2) between the second housing 220 and the third housing 230, which is sensed by the second sensor 320, is equal to or smaller than the first designated range (e.g., the first designated angle), and the processor 120 is operable to output a secondary pop-up message through the flexible display 240 (or the sub-display 250) when the angle (e.g., the second angle θ2) between the second housing 220 and the third housing 230 is equal to or smaller than the second designated range (e.g., the second designated angle) smaller than the angle in the first designated range.

According to various embodiments, the flexible display 240 (or the sub-display 250) is operable to display an initial screen, a configuration screen, and/or various applications of the multi-foldable electronic device 200. The flexible display 240 (or the sub-display 250) is operable to provide a user interface (UI) capable of providing various services to the user of the foldable electronic device 200.

According to various embodiments, the flexible display 240 (or the sub-display 250) is operable to perform a display function and an input function. The flexible display 240 (or the sub-display 250) includes a display and a touch circuit to perform the display function and the input function. The display may visually provide the user with menus, inputted data, function configuration information, and various pieces of information of the multi-foldable electronic device 200. The display may include at least one of a liquid crystal display (LCD), an organic light-emitting diode (OLED), and an active matrix organic light emitting diode (AMOLED). The touch circuit may include a pressure sensor or a touch sensor 168a such as a capacitive overlay type, a pressure type, a resistive overlay type, or an infrared detection type (infrared beam).

According to the embodiment, the memory 130 is operable to store information on threshold angles of the first housing 210 and the third housing 230 with respect to the second housing 220. The memory 130 is operable to store at least one executable instruction. The memory 130 is operable to store information (e.g., an alarm sound, vibration, and/or a pop-up message) for providing a notification related to the foldable electronic device 200.

According to various embodiments, the memory 130 is operable to store an initial screen, a configuration screen, and/or various applications of the multi-foldable electronic device 200 that are provided through the flexible display 240 (or the sub-display 250). The memory 130 is operable to store a user interface capable of providing various services to the user of the multi-foldable electronic device 200. The memory 130 is operable to serve to store a program (e.g., the program 140 in FIG. 1A), an operating system (e.g., the operating system 142 in FIG. 1A), various applications, and input/output data for processing and controlling the processor 120. The memory 130 is operable to store a program for controlling an overall operation of the multi-foldable electronic device 200. The memory 130 is operable to store various configuration information required for the multi-foldable electronic device 200 to process the functions.

According to the embodiment, the processor 120 is operatively connected to the first sensor 310, the second sensor 320, the sound output module 155, the haptic module 179, the flexible display 240 (or the sub-display 250), and the memory 130. The processor 120 is electrically connected to the first sensor 310, the second sensor 320, the sound output module 155, the haptic module 179, the flexible display 240 (or the sub-display 250), and the memory 130. The processor 120 is operable to control the functions and operations of the first sensor 310, the second sensor 320, the sound output module 155, the haptic module 179, the flexible display 240 (or the sub-display 250), and the memory 130. The processor 120 is configured to access the memory 130 and execute at least one instruction. The multi-foldable electronic device 200 may include at least one processor.

According to various embodiments, the processor 120 is configured to recognize the normal folding order when the first housing 210 is folded with respect to the second housing 220 first and the third housing 230 is folded with respect to the second housing 220 later. The processor 120 is configured to recognize the abnormal folding order when the third housing 230 is folded with respect to the second housing 220 first and the first housing 210 is folded with respect to the second housing 220 later.

According to various embodiments, the processor 120 is operable to control the overall operation of the multi-foldable electronic device 200, control signal flows between the internal constituent elements, process the data. For example, the processor 120 may include a central processing unit (CPU), an application processor, and/or a communication processor. The processor 120 may include a single core processor or a multi-core processor. The processor 120 is configured as at least one processor. For example, the processor 120 may include an application processor (e.g., the main processor 121 in FIG. 1A) and a sensor hub processor (e.g., the auxiliary processor 123 in FIG. 1A). The sensor hub processor is operatively connected to the first sensor 310 and the second sensor 320 and transfer information, which is sensed or detected by the first sensor 310 and/or the second sensor 320, to the application processor.

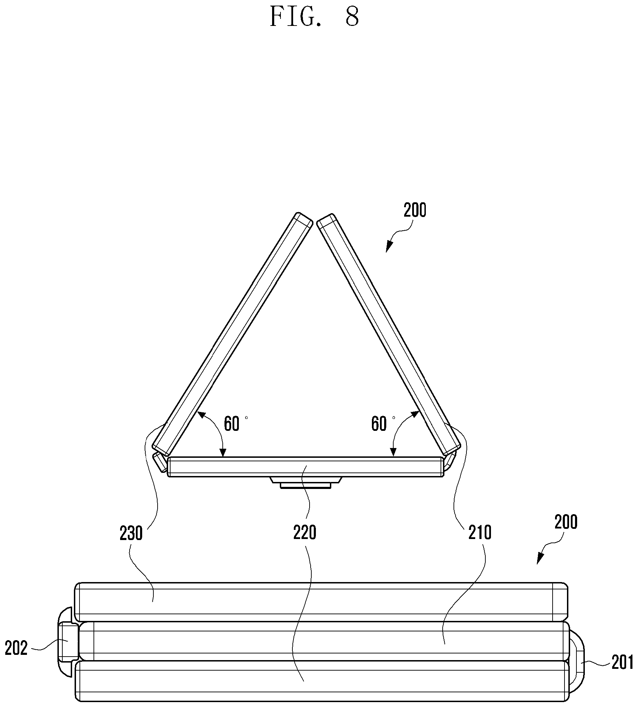

FIG. 8 is a view schematically illustrating one embodiment related to threshold angles of the first and third housings with respect to the second housing of the foldable electronic device according to the embodiment of the present disclosure.

With reference to FIG. 8, the multi-foldable electronic device 200 defines a triangular shape when the angle (e.g., the first angle θ1) between the first housing 210 and the second housing 220 is about 60° in case that the first housing 210 is folded with respect to the second housing 220 by means of the first hinge member 201 and when the angle (e.g., the second angle θ2) between the third housing 230 and the second housing 220 is about 60° in case that the third housing 230 is folded with respect to the second housing 220 by means of the second hinge member 202.

According to the embodiment, when the angle (e.g., the first angle θ1) between the first housing 210 and the second housing 220, which is detected by the first sensor 310, is about 50° and the angle (e.g., the second angle θ2) between the third housing 230 and the second housing 220, which is detected by the second sensor 320, is about 70°, the processor 120 of the multi-foldable electronic device 200 determines that the first housing 210 is folded toward the second housing 220 first and the third housing 230 is folded toward the second housing 220 later.

According to the embodiment, when the angle (e.g., the first angle θ1) between the first housing 210 and the second housing 220, which is detected by the first sensor 310, is about 70° and the angle (e.g., the second angle θ2) between the third housing 230 and the second housing 220, which is detected by the second sensor 320, is about 50°, the processor 120 of the multi-foldable electronic device 200 determines that the third housing 230 is folded toward the second housing 220 first and the first housing 210 is folded toward the second housing 220 later. In this case, the processor 120 determines that the first housing 210 and the third housing 230 are folded with respect to the second housing 220 in the abnormal order, and the processor 120 is operable to output at least one notification (e.g., an alarm sound, vibration, and/or a pop-up message).

According to the embodiment, only one of the alarm sound (e.g., the first notification), which is outputted through the sound output module 155, the vibration (e.g., the second notification), which is outputted through the haptic module 179, and the pop-up message (e.g., the third notification), which is provided through the flexible display 240 (or the sub-display 250), is outputted or all the notifications may be simultaneously outputted. In various embodiments, the first notification (e.g., the alarm sound), the second notification (e.g., the vibration), and the third notification (e.g., the pop-up message) are denoted by serial numbers for convenience of description, but are not limited to the serial numbers described above and may vary.

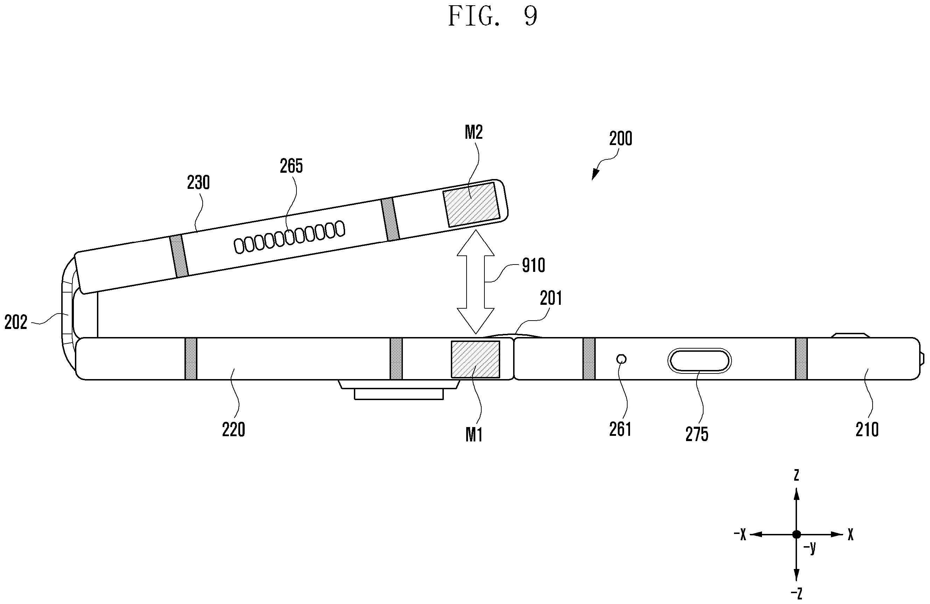

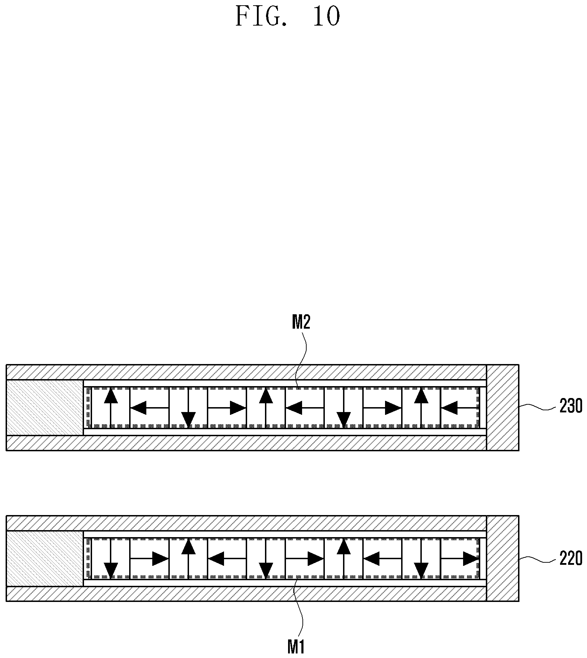

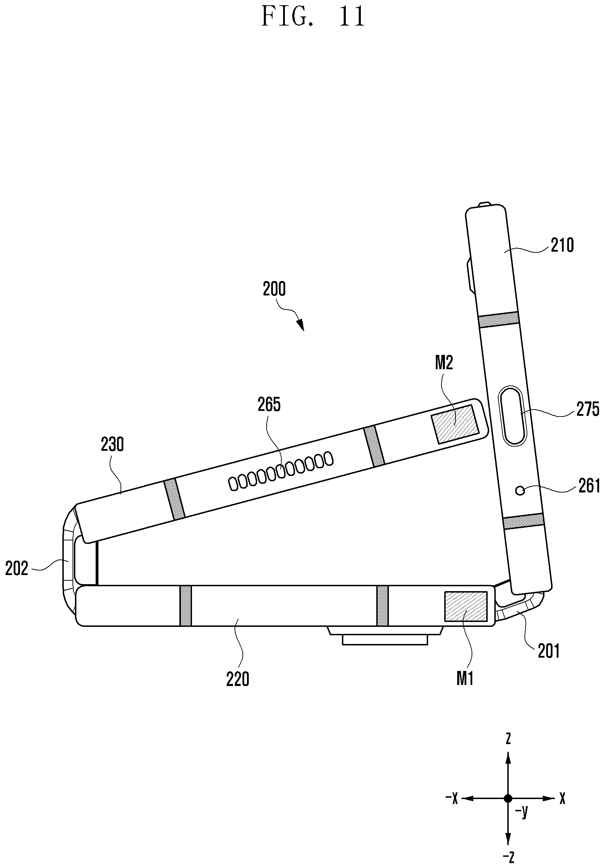

FIG. 9 is a view schematically illustrating a configuration in which the multi-foldable electronic device according to various embodiments of the present disclosure includes first and second magnets. FIG. 10 is a view schematically illustrating cross-sections of the first and second magnets according to the embodiment of the present disclosure. FIG. 11 is a view schematically illustrating an embodiment in which the first housing of the multi-foldable electronic device illustrated in FIG. 9 according to various embodiments of the present disclosure is prevented from being folded with respect to the second housing.

With reference to FIGS. 9 to 11, the multi-foldable electronic device 200 according to various embodiments of the present disclosure includes a first magnet M1 and a second magnet M2.

According to the embodiment, the second housing 220 includes the first magnet M1. The first magnet M1 is disposed on a part (e.g., the x-axis direction) of the second housing 220. For example, the first magnet M1 is disposed to be closer to the first hinge member 201 than the second hinge member 202. The first magnet M1 may have a first polarity (e.g., an N-pole).

According to the embodiment, the third housing 230 includes the second magnet M2. The second magnet M2 is disposed on a part (e.g., the -x-axis direction) of the third housing 230. For example, the second magnet M2 is disposed on a part of the third housing 230 corresponding to the first magnet M1 disposed on the second housing 220. The second magnet M2 has have a second polarity (e.g., an S-pole). The first magnet M1 and the second magnet M2 have different polarities. For example, in case that the first magnet M1 has the second polarity (e.g., the S-pole), the second magnet M2 has the first polarity (e.g., the N-pole). According to the embodiment, as illustrated in FIG. 10, the first magnet M1 and the second magnet M2 are each be disposed in a Halbach array. According to various embodiments, the first magnet M1 and the second magnet M2 are magnets arranged in the Halbach array having magnetic fields that face one another.

According to the embodiment, in case that the third housing 230 is folded toward the second housing 220, the first magnet M1 disposed on the second housing 220 and the second magnet M2 disposed on the third housing 230 generate repulsive forces, as indicated by the arrow 910 in FIG. 9. For example, in case that the third housing 230 is folded toward the second housing 220 first before the first housing 210 is folded, the second housing 220 is configured to push the second magnet M2 disposed on the third housing 230 by means of the first magnet M1. For example, when the repulsive force (e.g., repulsion) is generated between the first magnet M1 disposed on the second housing 220 and the second magnet M2 disposed on the third housing 230, the third housing 230 is spaced apart from the second housing 220 by a designated distance without being completely folded toward the second housing 220. For example, when the second housing 220 and the third housing 230 are spaced apart from each other at a designated interval as the repulsive force is generated between the first magnet M1 disposed on the second housing 220 and the second magnet M2 disposed on the third housing 230, the first housing 210 is caught by a part of the third housing 230, as illustrated in FIG. 11, such that a degree to which the first housing 210 is folded toward the second housing 220 by a designated angle or more is reduced, thereby reducing a risk of damage to the multi-foldable electronic device 200.

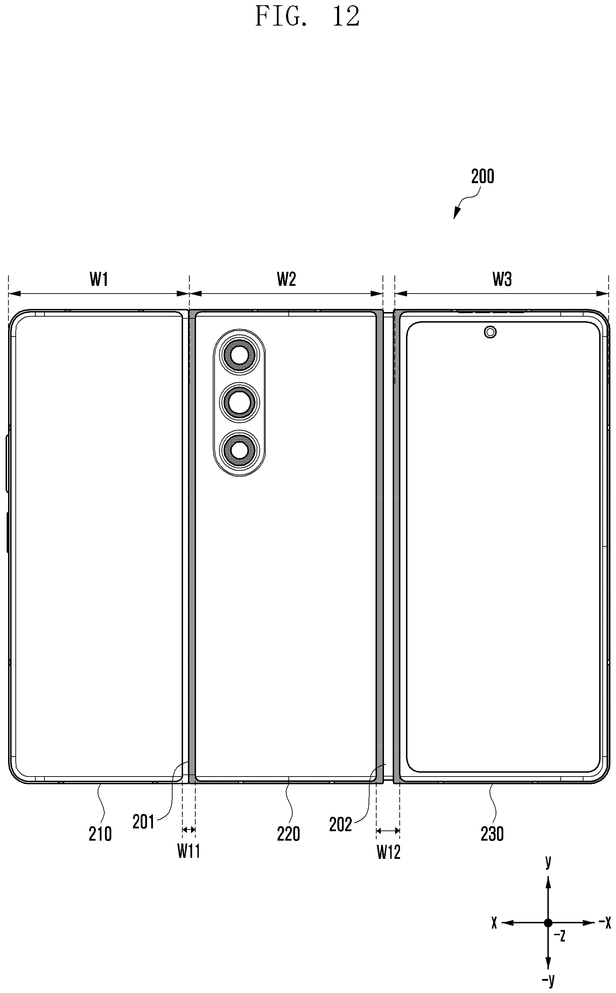

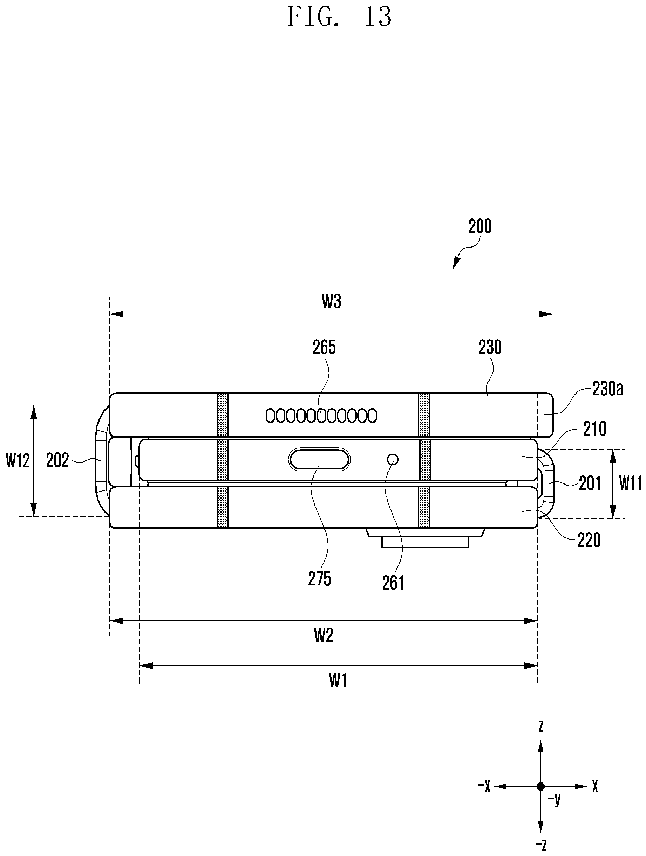

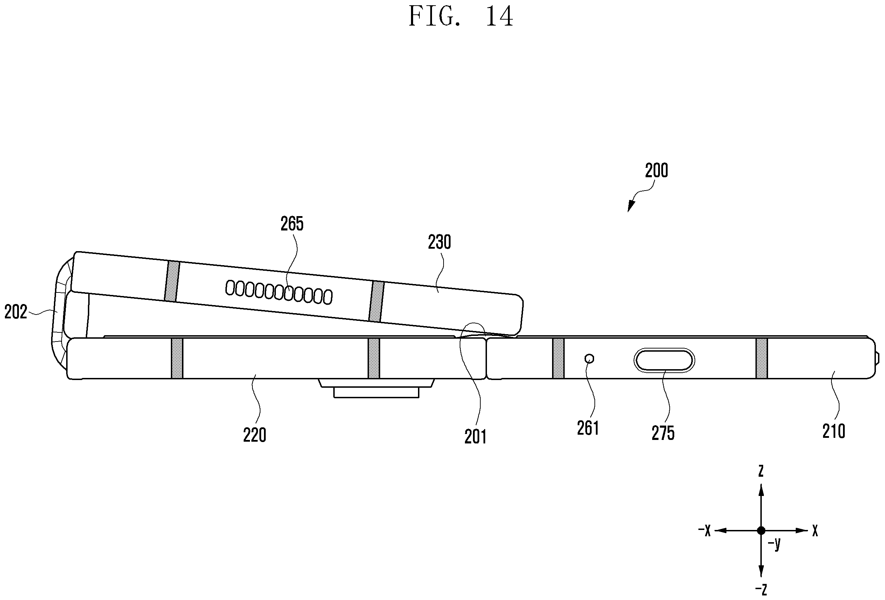

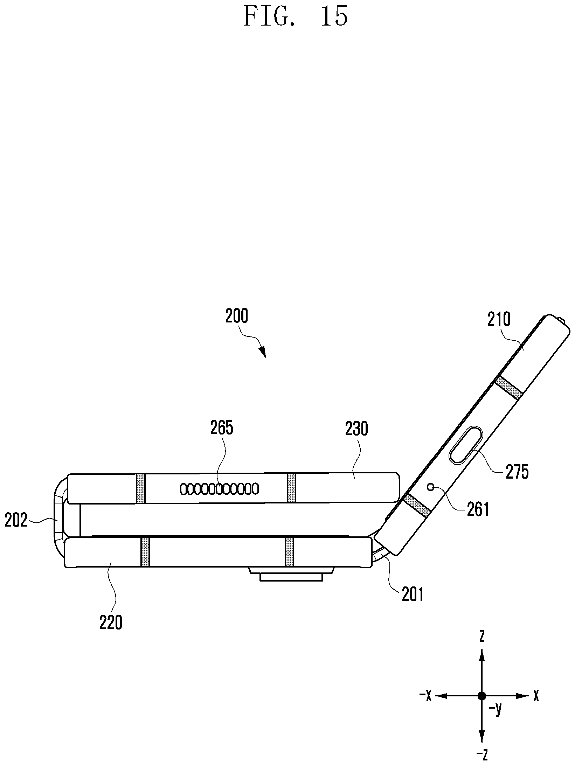

FIG. 12 is a schematic view illustrating the unfolded state of the multi-foldable electronic device according to various embodiments of the present disclosure when viewed from the rear side. FIG. 13 is a view schematically illustrating the folded state of the multi-foldable electronic device illustrated in FIG. 12 according to various embodiments of the present disclosure. FIG. 14 is a view schematically illustrating a state in which the third housing of the multi-foldable electronic device illustrated in FIG. 12 according to various embodiments of the present disclosure is folded toward the second housing. FIG. 15 is a view schematically illustrating a structure capable of reducing a degree to which the first housing is folded by means of the third housing of the multi-foldable electronic device illustrated in FIG. 12 according to various embodiments of the present disclosure.

According to various embodiments, the embodiments illustrated in FIGS. 1 to 11 are incorporated into or applied to the multi-foldable electronic device 200 illustrated in FIGS. 12 to 14. The embodiments of the multi-foldable electronic device 200 illustrated in FIGS. 12 to 14 are included in the embodiments illustrated in FIGS. 1 to 11. In the following description of the multi-foldable electronic device 200 according to various embodiments of the present disclosure, the constituent elements substantially identical to the constituent elements in the embodiments illustrated in FIGS. 1 to 11 will be designated by the same reference numerals, and a repeated description of functions thereof is omitted.

With reference to FIGS. 12 to 15, the multi-foldable electronic device 200 according to various embodiments of the present disclosure includes the first housing 210, the second housing 220, the third housing 230, the first hinge member 201, and the second hinge member 202.

According to the embodiment, the first housing 210 is foldably coupled to the first side (e.g., the x-axis direction) of the second housing 220. The first hinge member 201 is coupled between the first housing 210 and the second housing 220. The first hinge member 201 is disposed so that the first housing 210 and the second housing 220 is folded or unfolded with respect to each other.

According to the embodiment, the third housing 230 is foldably coupled to the second side (e.g., the -x-axis direction) of the second housing 220. The second hinge member 202 is coupled between the second housing 220 and the third housing 230. The second hinge member 202 is disposed so that the second housing 220 and the third housing 230 are folded or unfolded with respect to each other.

According to the embodiment, the normal folding order of the multi-foldable electronic device 200 is configured as the case in which the first housing 210 is folded with respect to the second housing 220 first by means of the first hinge member 201 and the third housing 230 is folded later with respect to the second housing 220 by means of the second hinge member 202.

According to the embodiment, the width w12 of the second hinge member 202 is larger than the width w11 of the first hinge member 201. For example, the width w12 of the second hinge member 202 is larger than the width w11 of the first hinge member 201 in case that the third housing 230 is disposed above the first housing 210 when the first housing 210 is folded with respect to the second housing 220 and the third housing 230 is folded with respect to the second housing 220.

According to the embodiment, the width w1 of the first housing 210 in the horizontal direction (e.g., the x-axis and -x-axis directions) is smaller than the width w2 of the second housing 220 in the horizontal direction (e.g., the x-axis and -x-axis directions). The width w2 of the second housing 220 in the horizontal direction (e.g., the x-axis and -x-axis directions) is smaller than the width w3 of the third housing 230 in the horizontal direction (e.g., the x-axis and -x-axis directions). The width w3 of the third housing 230 in the horizontal direction (e.g., the x-axis and -x-axis directions) is larger than the width w2 of the first housing 210 or the second housing 220 in the horizontal direction (e.g., the x-axis and -x-axis directions). For example, with reference to FIG. 13, the third housing 230 includes a partial area 230a larger than the width w2 of the second housing 220 in the horizontal direction (e.g., the x-axis and - x-axis directions).

According to the embodiment, when the width w3 of the third housing 230 in the horizontal direction (e.g., the x-axis and -x-axis directions) is larger than the width w2 of the second housing 220 in the horizontal direction (e.g., the x-axis and -x-axis directions), the first housing 210 is prevented from being folded toward the second housing 220 even though the third housing 230 is folded toward the second housing 220 first before the first housing 210 is folded. For example, even though the third housing 230 is folded toward the second housing 220 first before the first housing 210 is folded, the first housing 210 is caught by a part of the third housing 230, as illustrated in FIGS. 14 and 15, such that a degree to which the first housing 210 is folded toward the second housing 220 by a designated angle or more is reduced, thereby reducing a risk of damage to the multi-foldable electronic device 200.

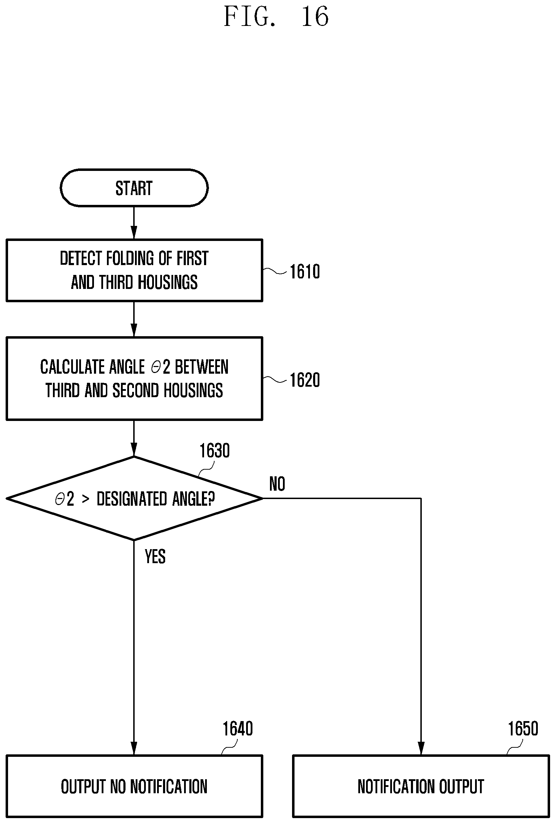

FIG. 16 is a flowchart schematically illustrating a method of providing a notification in case that the first and third housings of the multi-foldable electronic device according to the embodiment of the present disclosure are folded.

For example, the method disclosed below is performed by the constituent elements of the multi-foldable electronic device 200 illustrated in FIG. 5. For example, the method disclosed below may include the embodiments illustrated in FIGS. 1 to 15. In the following embodiment, the operations are sequentially performed. However, the operations may not be necessarily performed sequentially. For example, the order of the operations may be changed. For example, the order of the operations may be performed in parallel. For example, all the operations may not be performed, but at least some of the operations may be performed. The operations disclosed below may be performed by the processor 120 of the multi-foldable electronic device 200.

At operation 1610, the processor 120 detects, by using the first sensor 310, a situation in which the first housing 210 is folded toward the second housing 220, and the processor 120 detects, by using the second sensor 320, a situation in which the third housing 230 is folded toward the second housing 220.

According to the embodiment, the processor 120 detects, by using the second sensor 320, the situation in which the third housing 230 is folded toward the second housing 220 first. For example, at operation 1610, the processor 120 detects the situation in which the third housing 230 is folded with respect to the second housing 220 first before the first housing 210 is folded.

At operation 1620, the processor 120 calculates the angle (e.g., the second angle θ2) between the third housing 230 and the second housing 220 that is detected by using the second sensor 320.

At operation 1630, the processor 120 identifies whether the angle (e.g., the second angle θ2) between the third housing 230 and the second housing 220 is equal to or larger than a designated angle (e.g., about 70°).

At operation 1640, when the processor 120 identifies that the angle (e.g., the second angle θ2) between the third housing 230 and the second housing 220 is equal to or larger than the designated angle (e.g., about 70°), the processor 120 does not output a notification (e.g., an alarm sound, vibration, and/or a pop-up message).

At operation 1650, when the processor 120 identifies that the angle (e.g., the second angle θ2) between the third housing 230 and the second housing 220 is smaller than the designated angle (e.g., about 70°), the processor 120 outputs at least one notification (e.g., an alarm sound, vibration, and/or a pop-up message).

According to the embodiment, the foldable electronic device 200 outputs at least one notification (e.g., an alarm sound, vibration, and/or a pop-up message) in case that the third housing 230 is folded toward the second housing 220 first before the first housing 210 is folded, thereby notifying the user that the foldable electronic device 200 is being folded in the abnormal order.

According to the embodiment, the processor 120 provides at least one notification when the folding angle between the second housing 220 and the third housing 230, which is sensed by the second sensor 320, is smaller than the folding angle between the second housing 220 and the first housing 210 that is sensed by the first sensor 310.

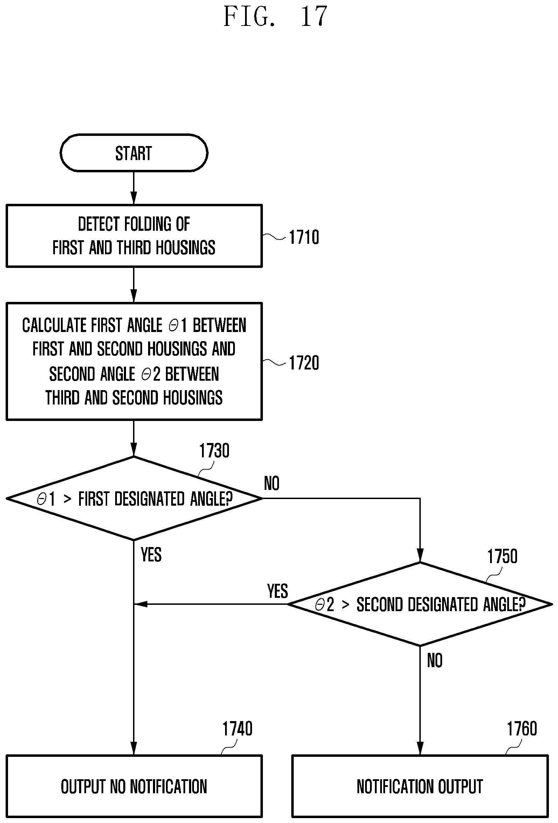

FIG. 17 is a flowchart schematically illustrating a method of providing a notification in case that the first and third housings of the multi-foldable electronic device according to the embodiment of the present disclosure are folded with respect to the second housing.

At operation 1710, the processor 120 detects, by using the first sensor 310, the situation in which the first housing 210 is folded toward the second housing 220, and the processor 120 may detect, by using the second sensor 320, the situation in which the third housing 230 is folded toward the second housing 220.

At operation 1720, the processor 120 calculates the first angle θ1 between the first housing 210 and the second housing 220, which is detected by using the first sensor 310, and the second angle θ2 between the third housing 230 and the second housing 220 that is detected by the second sensor 320.

At operation 1730, the processor 120 identifies whether the first angle θ1 between the first housing 210 and the second housing 220 is equal to or larger than the first designated angle (e.g., about 90°).

At operation 1740, when the processor 120 identifies that the first angle θ1 between the first housing 210 and the second housing 220 is equal to or larger than the first designated angle (e.g., about 90°), the processor 120 does not output a notification (e.g., an alarm sound, vibration, and/or a pop-up message).

At operation 1750, when the processor 120 identifies that the first angle θ1 between the first housing 210 and the second housing 220 is smaller than the first designated angle (e.g., about 90°), the processor 120 identifies whether the second angle θ2 between the third housing 230 and the second housing 220 is equal to or larger than the second designated angle (e.g., about 70°).

When the identification result at operation 1750 indicates that the second angle θ2 between the third housing 230 and the second housing 220 is equal to or larger than the second designated angle (e.g., about 70°), the processor 120 does not output a notification (e.g., an alarm sound, vibration, and/or a pop-up message).

At operation 1760, when the processor 120 identifies that the second angle θ2 between the third housing 230 and the second housing 220 is smaller than the second designated angle (e.g., about 70°), the processor 120 outputs at least one notification (e.g., an alarm sound, vibration, and/or a pop-up message).

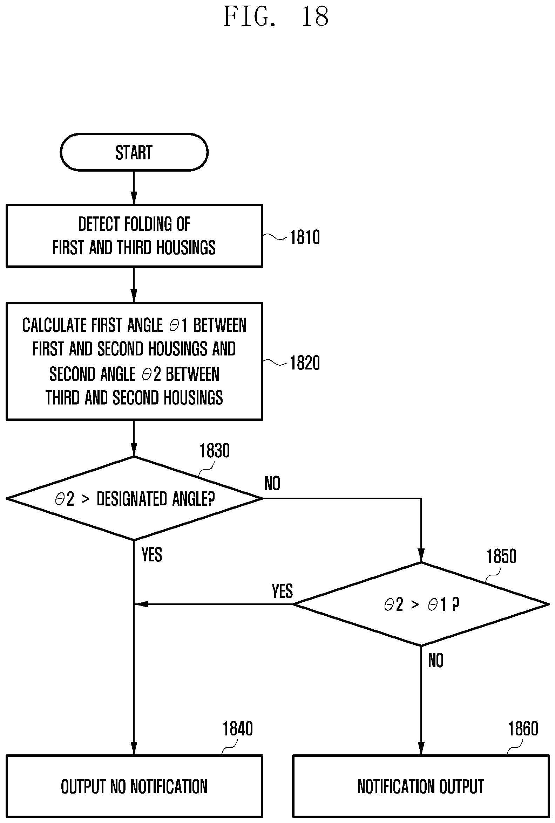

FIG. 18 is a flowchart schematically illustrating various embodiments of the method of providing a notification in case that the first and third housings of the multi-foldable electronic device according to the embodiment of the present disclosure are folded with respect to the second housing.

At operation 1810, the processor 120 detects, by using the first sensor 310, the situation in which the first housing 210 is folded toward the second housing 220, and the processor 120 detects, by using the second sensor 320, the situation in which the third housing 230 is folded toward the second housing 220.

At operation 1820, the processor 120 calculates the first angle θ1 between the first housing 210 and the second housing 220, which is detected by using the first sensor 310, and the second angle θ2 between the third housing 230 and the second housing 220 that is detected by the second sensor 320.

At operation 1830, the processor 120 identifies whether the second angle θ2 between the third housing 230 and the second housing 220 is equal to or larger than the second designated angle (e.g., about 70°).

At operation 1840, when the processor 120 identifies that the second angle θ2 between the third housing 230 and the second housing 220 is equal to or larger than the second designated angle (e.g., about 70°), the processor 120 does not output a notification (e.g., an alarm sound, vibration, and/or a pop-up message).

At operation 1850, when the processor 120 identifies that the second angle θ2 between the third housing 230 and the second housing 220 is smaller than the second designated angle (e.g., about 70°), the processor 120 identifies whether the second angle θ2 between the third housing 230 and the second housing 220 is equal to or larger than the first angle θ1 between the first housing 210 and the second housing 220.

The identification result at operation 1850 indicates that the second angle θ2 between the third housing 230 and the second housing 220 is equal to or larger than the first angle θ1 between the first housing 210 and the second housing 220, the processor 120 does not output a notification (e.g., an alarm sound, vibration, and/or a pop-up message).

At operation 1860, when the processor 120 identifies that the second angle θ2 between the third housing 230 and the second housing 220 is smaller than the first angle θ1 between the first housing 210 and the second housing 220, the processor 120 outputs at least one notification (e.g., an alarm sound, vibration, and/or a pop-up message).

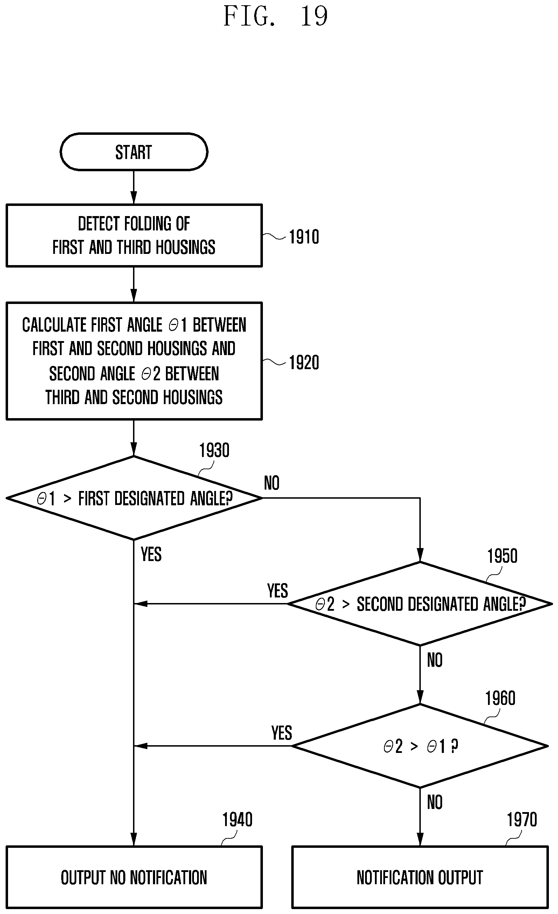

FIG. 19 is a flowchart schematically illustrating a method of providing a notification in accordance with first and second designated angles of the multi-foldable electronic device according to the embodiment of the present disclosure.

At operation 1910, the processor 120 detects, by using the first sensor 310, the situation in which the first housing 210 is folded toward the second housing 220, and the processor 120 detects, by using the second sensor 320, the situation in which the third housing 230 is folded toward the second housing 220.

At operation 1920, the processor 120 calculates the first angle θ1 between the first housing 210 and the second housing 220, which is detected by using the first sensor 310, and the second angle θ2 between the third housing 230 and the second housing 220 that is detected by the second sensor 320.

At operation 1930, the processor 120 identifies whether the first angle θ1 between the first housing 210 and the second housing 220 is equal to or larger than the first designated angle (e.g., about 90°).

At operation 1940, when the processor 120 identifies that the first angle θ1 between the first housing 210 and the second housing 220 is equal to or larger than the first designated angle (e.g., about 90°), the processor 120 does not output a notification (e.g., an alarm sound, vibration, and/or a pop-up message).

When the identification result at operation 1930 indicates that the first angle θ1 between the first housing 210 and the second housing 220 is smaller than the first designated angle (e.g., about 90°), the processor 120, at operation 1950, identifies whether the second angle θ2 between the third housing 230 and the second housing 220 is equal to or larger than the second designated angle (e.g., about 70°).

When the identification result at operation 1950 indicates that the second angle θ2 between the third housing 230 and the second housing 220 is equal to or larger than the second designated angle (e.g., about 70°), the processor 120 does not output a notification (e.g., an alarm sound, vibration, and/or a pop-up message).

At operation 1960, when the processor 120 identifies that the second angle θ2 between the third housing 230 and the second housing 220 is smaller than the second designated angle (e.g., about 70°), the processor 120 identifies whether the second angle θ2 between the third housing 230 and the second housing 220 is equal to or larger than the first angle θ1 between the first housing 210 and the second housing 220.

The identification result at operation 1950 indicates that the second angle θ2 between the third housing 230 and the second housing 220 is equal to or larger than the first angle θ1 between the first housing 210 and the second housing 220, the processor 120 does not output a notification (e.g., an alarm sound, vibration, and/or a pop-up message).

At operation 1970, when the processor 120 identifies that the second angle θ2 between the third housing 230 and the second housing 220 is smaller than the first angle θ1 between the first housing 210 and the second housing 220, the processor 120 outputs at least one notification (e.g., an alarm sound, vibration, and/or a pop-up message).

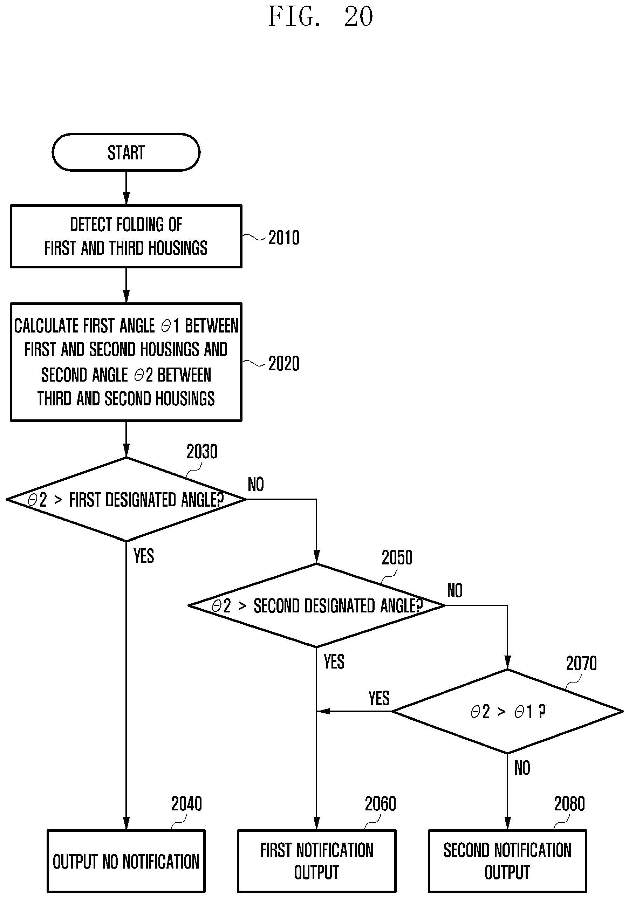

FIG. 20 is a flowchart schematically illustrating a method of providing first and second notifications in accordance with the first and second designated angles of the multi-foldable electronic device according to the embodiment of the present disclosure.

At operation 2010, the processor 120 detects, by using the first sensor 310, the situation in which the first housing 210 is folded toward the second housing 220, and the processor 120 detects, by using the second sensor 320, the situation in which the third housing 230 is folded toward the second housing 220.

At operation 2020, the processor 120 calculates the first angle θ1 between the first housing 210 and the second housing 220, which is detected by using the first sensor 310, and the second angle θ2 between the third housing 230 and the second housing 220 that is detected by the second sensor 320.

At operation 2030, the processor 120 identifies whether the second angle θ2 between the third housing 230 and the second housing 220 is equal to or larger than the first designated angle (e.g., about 90°).

At operation 2040, when the processor 120 identifies that the second angle θ2 between the third housing 230 and the second housing 220 is equal to or larger than the first designated angle (e.g., about 90°), the processor 120 does not output a notification (e.g., an alarm sound, vibration, and/or a pop-up message).

When the identification result at operation 2030 indicates that the second angle θ2 between the third housing 230 and the second housing 220 is smaller than the first designated angle (e.g., about 90°), the processor 120, at operation 2050, identifies whether the second angle θ2 between the third housing 230 and the second housing 220 is equal to or larger than the second designated angle (e.g., about 70°).

When the identification result at operation 2050 indicates that the second angle θ2 between the third housing 230 and the second housing 220 is equal to or larger than the second designated angle (e.g., about 70°), the processor 120, at operation 2060, outputs the first notification (e.g., the primary alarm sound, the primary vibration, and/or the primary pop-up message). According to the embodiment, the first notification may include an alarm sound outputted through the sound output module 155. According to various embodiments, the first notification may include vibration outputted through the haptic module 179.

At operation 2070, when the processor 120 identifies that the second angle θ2 between the third housing 230 and the second housing 220 is smaller than the second designated angle (e.g., about 70°), the processor 120 identifies whether the second angle θ2 between the third housing 230 and the second housing 220 is equal to or larger than the first angle θ1 between the first housing 210 and the second housing 220.

When the identification result at operation 2070 indicates that the second angle θ2 between the third housing 230 and the second housing 220 is equal to or larger than the first angle θ1 between the first housing 210 and the second housing 220, the processor 120, at operation 2060, outputs the first notification (e.g., the primary alarm sound, the primary vibration, and/or the primary pop-up message).

When the identification result at operation 2070 indicates that the second angle θ2 between the third housing 230 and the second housing 220 is smaller than the first angle θ1 between the first housing 210 and the second housing 220, the processor 120, at operation 2080, outputs the second notification (e.g., the secondary alarm sound, the secondary vibration, and/or the secondary pop-up message). According to the embodiment, the second notification may include vibration outputted through the haptic module 179. According to various embodiments, the second notification may include an alarm sound outputted through the sound output module 155.

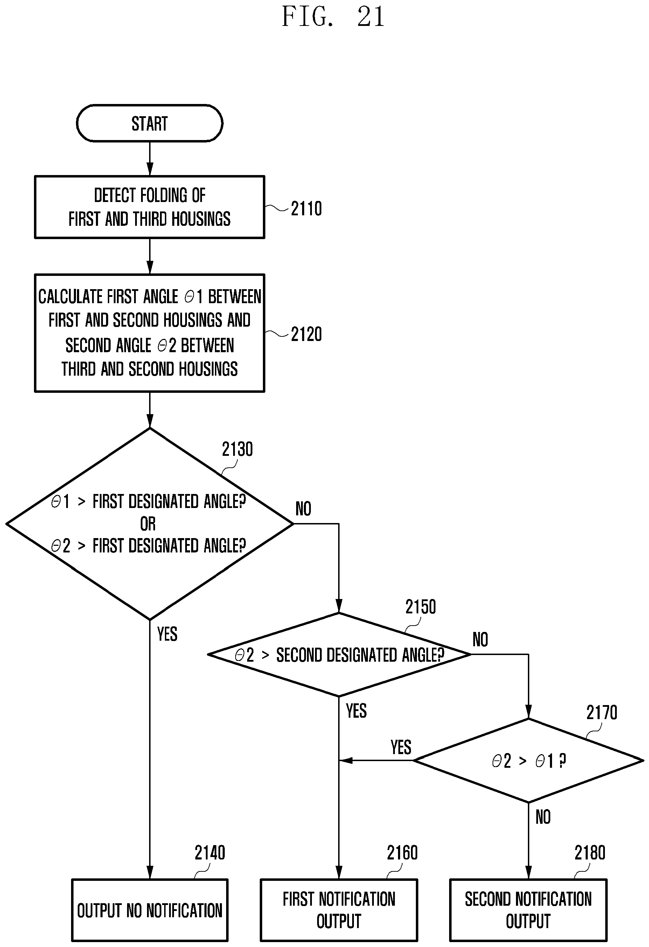

FIG. 21 is a flowchart schematically illustrating various embodiments of the method of providing the first and second notifications in accordance with the first and second designated angles of the multi-foldable electronic device according to the embodiment of the present disclosure.

At operation 2110, the processor 120 detects, by using the first sensor 310, the situation in which the first housing 210 is folded toward the second housing 220, and the processor 120 detects, by using the second sensor 320, the situation in which the third housing 230 is folded toward the second housing 220.

At operation 2120, the processor 120 calculates the first angle θ1 between the first housing 210 and the second housing 220, which is detected by using the first sensor 310, and the second angle θ2 between the third housing 230 and the second housing 220 that is detected by the second sensor 320.

At operation 2130, the processor 120 identifies whether the first angle θ1 between the first housing 210 and the second housing 220 is equal to or larger than the first designated angle (e.g., about 90°) or whether the second angle θ2 between the third housing 230 and the second housing 220 is equal to or larger than the first designated angle (e.g., about 90°).

When the identification result at operation 2130 indicates that the first angle θ1 between the first housing 210 and the second housing 220 is equal to or larger than the first designated angle (e.g., about 90°) or the second angle θ2 between the third housing 230 and the second housing 220 is equal to or larger than the first designated angle (e.g., about 90°), the processor 120, at operation 2140, does not output a notification (e.g., an alarm sound, vibration, and/or a pop-up message).

When the identification result at operation 2130 indicates that the first angle θ1 between the first housing 210 and the second housing 220 is smaller than the first designated angle (e.g., about 90°) or the second angle θ2 between the third housing 230 and the second housing 220 is smaller than the first designated angle (e.g., about 90°), the processor 120, at operation 2150, identifies whether the second angle θ2 between the third housing 230 and the second housing 220 is equal to or larger than the second designated angle (e.g., about 70°).

When the identification result at operation 2150 indicates that the second angle θ2 between the third housing 230 and the second housing 220 is equal to or larger than the second designated angle (e.g., about 70°), the processor 120, at operation 2160, outputs the first notification (e.g., the primary alarm sound, the primary vibration, and/or the primary pop-up message). According to the embodiment, the first notification may include an alarm sound outputted through the sound output module 155. According to various embodiments, the first notification may include vibration outputted through the haptic module 179.

When the identification result at operation 2150 indicates that the second angle θ2 between the third housing 230 and the second housing 220 is smaller than the second designated angle (e.g., about 70°), the processor 120, at operation 2170, identifies whether the second angle θ2 between the third housing 230 and the second housing 220 is equal to or larger than the first angle θ1 between the first housing 210 and the second housing 220.

When the identification result at operation 2170 indicates that the second angle θ2 between the third housing 230 and the second housing 220 is equal to or larger than the first angle θ1 between the first housing 210 and the second housing 220, the processor 120, at operation 2160, outputs the first notification (e.g., the primary alarm sound, the primary vibration, and/or the primary pop-up message).

When the identification result at operation 2170 indicates that the second angle θ2 between the third housing 230 and the second housing 220 is smaller than the first angle θ1 between the first housing 210 and the second housing 220, the processor 120, at operation 2180, may output the second notification (e.g., the secondary alarm sound, the secondary vibration, and/or the secondary pop-up message). According to the embodiment, the second notification may include vibration outputted through the haptic module 179. According to various embodiments, the second notification may include an alarm sound outputted through the sound output module 155.

The multi-foldable electronic device 200 according to the embodiment of the present disclosure includes the first housing 210, the second housing 220 foldably coupled to the first side of the first housing 220, the third housing 230 foldably coupled to the second side of the second housing 220, the first hinge member 201 coupled between the first housing 210 and the second housing 220, and the second hinge member 202 coupled between the second housing 220 and the third housing 230. According to the embodiment, the multi-foldable electronic device 200 includes the flexible display 240 including the first display area disposed on the first housing 210, the second display area disposed on the second housing 220, and the third display area disposed on the third housing 230. According to the embodiment, the multi-foldable electronic device 200 includes the first sensor 310 configured to sense the first angle between the second housing 220 and the first housing 210, and the second sensor 320 configured to sense the second angle between the second housing 220 and the third housing 230. According to the embodiment, the multi-foldable electronic device 200 includes the memory 130 configured to store executable instructions, and at least one processor 120 operatively connected to the flexible display 240, the first sensor 310, the second sensor 320, and the memory 130 and configured to access the memory 130 and execute the instructions. According to the embodiment, the at least one processor 120 is configured to provide at least one notification in case that the second angle between the second housing 220 and the third housing 230, which is sensed by the second sensor 320, is smaller than the first angle between the second housing 220 and the first housing 210 that is sensed by the first sensor 310.

According to the embodiment, the at least one processor may provide the first notification when the second angle between the second housing and the third housing, which is sensed by the second sensor, is equal to or smaller than the first designated angle.

According to the embodiment, the at least one processor may provide the second notification when the second angle between the second housing and the third housing, which is sensed by the second sensor, is equal to or smaller than the second designated angle smaller than the first designated angle.

According to the embodiment, the multi-foldable electronic device may further include the sound output module and the haptic module, and the notification may include at least one of the pop-up message displayed through the flexible display, the alarm sound outputted through the sound output module, and the vibration outputted through the haptic module.

According to the embodiment, the at least one processor may be configured to recognize the normal folding order as the case in which the first housing is folded with respect to the second housing first and then the third housing is folded with respect to the second housing.

According to the embodiment, the at least one processor may be configured to recognize the abnormal folding order as the case in which the third housing is folded with respect to the second housing first and then the first housing is folded with respect to the second housing.

According to the embodiment, the width of the second hinge member may be larger than the width of the first hinge member.

According to the embodiment, the multi-foldable electronic device may include the first magnet disposed on a part of the second housing, and the second magnet disposed on a part of the third housing, which corresponds to the first magnet, and having the polarity opposite to the polarity of the first magnet, and the multi-foldable electronic device may be configured to push the second magnet by using the first magnet when the third housing is folded with respect to the second housing first.

According to the embodiment, the first magnet and the second magnet may be disposed in the Halbach array.

According to the embodiment, the width of the first housing may be smaller than the width of the second housing, and the width of the third housing may be substantially equal to the width of the second housing.

According to the embodiment, the width of the first housing may be smaller than the width of the second housing, and the width of the third housing may be larger than the width of the second housing.

The method of a notification related to the multi-foldable electronic device 200 according to various embodiments of the present disclosure may include the operation of detecting, by the processor 120, by using the second sensor 320, the situation in which the third housing 230 is folded toward the second housing 220 first before the first housing 210 is folded. According to the embodiment, the method may include the operation of calculating, by the processor 120, the angle between the third housing 230 and the second housing 220 that is detected by using the second sensor 320. According to the embodiment, the method may include the operation of identifying, by the processor 120, whether the angle between the third housing 230 and the second housing 220 is equal to or larger than the designated angle. According to the embodiment, the method may include the operation of outputting at least one notification when it is identified that the angle between the third housing 230 and the second housing 220 is smaller than the designated angle.

According to the embodiment, the method may include the operation of providing the first notification when the folding angle between the third housing and the second housing, which is detected by using the second sensor, is equal to or smaller than the first designated angle. According to the embodiment, the method may include the operation of providing the second notification when the folding angle between the third housing and the second housing, which is detected by using the second sensor, is equal to or smaller than the second designated angle smaller than the first designated angle.

According to the embodiment, the at least one notification may include a pop-up message displayed through the flexible display, an alarm sound outputted through the sound output module, or vibration outputted through the haptic module.

According to the embodiment, the method may include the operation of recognizing the normal folding order as the case in which the first housing is folded with respect to the second housing first and the third housing is folded with respect to the second housing later.

According to the embodiment, the method may include the operation of recognizing the abnormal folding order as the case in which the third housing is folded with respect to the second housing first and the first housing is folded with respect to the second housing later.

According to the embodiment, the multi-foldable electronic device may further include the first hinge member coupled between the first housing and the second housing, and the second hinge member coupled between the second housing and the third housing, and the width of the second hinge member may be larger than the width of the first hinge member.

According to the embodiment, the multi-foldable electronic device may include the first magnet disposed on a part of the second housing, and the second magnet disposed on a part of the third housing, which corresponds to the first magnet, and having the polarity opposite to the polarity of the first magnet. According to the embodiment, the method may include the operation of pushing the second magnet by means of the first magnet when the third housing is folded with respect to the second housing first.

According to the embodiment, the first magnet and the second magnet may be disposed in the Halbach array.

According to the embodiment, the width of the first housing may be smaller than the width of the second housing, and the width of the third housing may be substantially equal to the width of the second housing.

According to the embodiment, the width of the first housing may be smaller than the width of the second housing, and the width of the third housing may be larger than the width of the second housing.

While the present disclosure has been described above with reference to various embodiments of the present disclosure, it is apparent that the alterations and modifications may be made by those skilled in the art without departing from the technical spirit of the present disclosure and belong to the present disclosure.

## Claims

1. A multi-foldable electronic device 200 comprising:
a first housing 210;
a second housing 220 foldably coupled to a first side of the first housing 210;
a third housing 230 foldably coupled to a second side of the second housing 220;
a first hinge member 201 coupled between the first housing 210 and the second housing 220;
a second hinge member 202 coupled between the second housing 220 and the third housing 230;
a flexible display 240 comprising a first display area disposed on the first housing 210, a second display area disposed on the second housing 220, and a third display area disposed on the third housing 230;
a first sensor 310 configured to sense a first angle between the second housing 220 and the first housing 210;
a second sensor 320 configured to sense a second angle between the second housing 220 and the third housing 230;
a memory 130 configured to store executable instructions; and
at least one processor 120 operatively connected to the flexible display 240, the first sensor 310, the second sensor 320, and the memory 130 and configured to access the memory 130 and execute the instructions,
wherein the at least one processor 120 is configured to provide at least one notification when the second angle between the second housing 220 and the third housing 230, which is sensed by the second sensor 320, is smaller than the first angle between the second housing 220 and the first housing 210 that is sensed by the first sensor 310.

2. The multi-foldable electronic device of claim 1, wherein the at least one processor is configured to provide a first notification when the second angle between the second housing and the third housing, which is sensed by the second sensor, is equal to or smaller than a first designated angle, and the at least one processor is configured to provide a second notification when the second angle between the second housing and the third housing, which is sensed by the second sensor, is equal to or smaller than a second designated angle smaller than the first designated angle.

3. The multi-foldable electronic device of claim 1 or claim 2, further comprising:
a sound output module; and
a haptic module,
wherein the notification includes at least one of a pop-up message displayed through the flexible display, an alarm sound outputted through the sound output module, and vibration outputted through the haptic module.

4. The multi-foldable electronic device of any one of claims 1 to 3, wherein the at least one processor is configured to recognize a normal folding order as a case in which the first housing is folded with respect to the second housing first and the third housing is folded with respect to the second housing.

5. The multi-foldable electronic device of any one of claims 1 to 4, wherein the at least one processor is configured to recognize an abnormal folding order as a case in which the third housing is folded with respect to the second housing first and the first housing is folded with respect to the second housing.

6. The multi-foldable electronic device of any one of claims 1 to 5, wherein a width of the second hinge member is larger than a width of the first hinge member.

7. The multi-foldable electronic device of any one of claims 1 to 6, comprising:
a first magnet disposed on a part of the second housing; and
a second magnet disposed on a part of the third housing, , and having a polarity opposite to a polarity of the first magnet,
wherein the multi-foldable electronic device is configured to push the second magnet by means of the first magnet when the third housing is folded with respect to the second housing first.

8. The multi-foldable electronic device of claim 7, wherein the first magnet and the second magnet are disposed in a Halbach array.

9. The multi-foldable electronic device of any one of claims 1 to 8, wherein a width of the first housing is smaller than a width of the second housing, and a width of the third housing is substantially equal to the width of the second housing.

10. The multi-foldable electronic device of any one of claims 1 to 8, wherein a width of the first housing is smaller than a width of the second housing, and a width of the third housing is larger than the width of the second housing.

11. A method of providing a notification of a multi-foldable electronic device 200, the method comprising:
detecting, by using a second sensor 320 by a processor 120, a situation in which a third housing 230 is folded toward a second housing 220 first before a first housing 210 is folded;
calculating, by the processor 120, an angle between the third housing 230 and the second housing 220 that is detected by using the second sensor 320;
identifying, by the processor 120, whether the angle between the third housing 230 and the second housing 220 is equal to or larger than a designated angle; and
outputting at least one notification when it is identified that the angle between the third housing 230 and the second housing 220 is smaller than the designated angle.

12. The method of claim 11, comprising:
providing a first notification when a folding angle between the third housing and the second housing, which is detected by using the second sensor, is equal to or smaller than a first designated angle; and
providing a second notification when the folding angle between the third housing and the second housing, which is detected by using the second sensor, is equal to or smaller than a second designated angle smaller than the first designated angle.

13. The method of claim 11, wherein the at least one notification includes a pop-up message displayed through a flexible display, an alarm sound outputted through a sound output module, or vibration outputted through a haptic module.

14. The method of any one of claims 11 to 13, comprising:
recognizing a normal folding order as a case in which the first housing is folded with respect to the second housing first and the third housing is folded with respect to the second housing later.

15. The method of any one of claims 11 to 14, comprising:
recognizing an abnormal folding order as a case in which the third housing is folded with respect to the second housing first and the first housing is folded with respect to the second housing later.
